(19) **Europäisches Patentamt / European Patent Office / Office européen des brevets**

(11) **EP 4 557 863 A1**

(12) # EUROPEAN PATENT APPLICATION
published in accordance with Art. 153(4) EPC

(43) Date of publication:
**21.05.2025 Bulletin 2025/21**

(21) Application number: **23851692.6**

(22) Date of filing: **03.08.2023**

(51) International Patent Classification (IPC):
*H04W 72/12* *(2023.01)*

(52) Cooperative Patent Classification (CPC):
**H04W 72/12**

(86) International application number:
**PCT/CN2023/111071**

(87) International publication number:
**WO 2024/032471 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022 CN 202210970352
13.01.2023 CN 202310084191**

(71) Applicant: **Huawei Technologies Co., Ltd.
Shenzhen, Guangdong 518129 (CN)**

(72) Inventors:
• **LI, Fang**
**Shenzhen, Guangdong 518129 (CN)**
• **FAN, Bo**
**Shenzhen, Guangdong 518129 (CN)**
• **YUAN, Shitong**
**Shenzhen, Guangdong 518129 (CN)**

(74) Representative: **Gill Jennings & Every LLP
The Broadgate Tower
20 Primrose Street
London EC2A 2ES (GB)**

(54) **UPLINK SCHEDULING METHOD AND APPARATUS**

(57)    An uplink scheduling method and an apparatus are provided. The method includes: A network device determines uplink scheduling information, where the uplink scheduling information is used for scheduling a terminal device to perform a first uplink transmission and a second uplink transmission, a first timing advance associated with the first uplink transmission is different from a second timing advance associated with the second uplink transmission, the first uplink transmission and the second uplink transmission are two consecutive uplink transmissions, and there is an interval of preset duration between the first uplink transmission and the second uplink transmission; and the network device sends the uplink scheduling information to the terminal device. According to the foregoing method, when there is an interval between two adjacent uplink transmissions that the network device schedules the terminal device to perform, it is avoided that the first uplink transmission and the second uplink transmission overlap in time domain, thereby improving data transmission efficiency.

FIG. 9

**Description**

CROSS-REFERENCE TO RELATED APPLICATIONS

This application claims priority to Chinese Patent Application No. 202210970352.4, filed with the China National Intellectual Property Administration on August 12, 2022 and entitled "UPLINK SCHEDULING METHOD AND APPARATUS", which is incorporated herein by reference in its entirety. This application claims priority to Chinese Patent Application No. 202310084191.3, filed with the China National Intellectual Property Administration on January 13, 2023 and entitled "UPLINK SCHEDULING METHOD AND APPARATUS", which is incorporated herein by reference in its entirety.

TECHNICAL FIELD

This application relates to the field of communication technologies, and in particular, to an uplink scheduling method and an apparatus.

BACKGROUND

There is a delay in a signal transmission in space, and distances from different terminal devices to a network device are different. Therefore, differences between time points of arrival of signals sent by different terminal devices at the network device are also different. In this way, the signals sent by the different terminal devices arrive at the network device at different moments, and the signals of the different terminal devices interfere with each other. Therefore, the network device requires that signals of different terminal devices from a same subframe but different frequency domain resources arrive at the network device at aligned time. In this way, the network device can correctly receive uplink data sent by the terminal device. Therefore, compared with downlink receiving, uplink sending of the terminal device requires a timing advance, and timing advances (timing advances, TAs) of different terminal devices are different.

Currently, the terminal device and the network device maintain only one uplink TA in one serving cell, in other words, the terminal device uses one uplink TA for each time of uplink sending. In a multi-site transmission scenario, it is considered that a plurality of TAs are introduced in one serving cell. However, when uplink transmissions in adjacent slots or symbols are associated with different TAs, the two transmissions may overlap.

In conclusion, in a multi-TA mode, how to resolve overlapping between adjacent symbols or slots caused by a plurality of TAs is an urgent problem to be resolved.

SUMMARY

This application provides an uplink scheduling method and an apparatus, to resolve overlapping between adjacent symbols or slots caused by a plurality of TAs.

According to a first aspect, this application provides an uplink scheduling method. The method includes:
A network device determines uplink scheduling information, where the uplink scheduling information is used for scheduling a terminal device to perform a first uplink transmission and a second uplink transmission, the first uplink transmission and the second uplink transmission are two consecutive uplink transmissions, and there is an interval of preset duration between the first uplink transmission and the second uplink transmission; and the network device sends the uplink scheduling information to the terminal device.

According to the foregoing method, when there is an interval between two adjacent uplink transmissions that the network device schedules the terminal device to perform, it is avoided that the first uplink transmission and the second uplink transmission overlap in time domain, thereby improving data transmission efficiency.

According to a second aspect, this application provides an uplink scheduling method. The method includes: A terminal device receives uplink scheduling information from a network device, where the uplink scheduling information is used for scheduling the terminal device to perform a first uplink transmission and a second uplink transmission, the first uplink transmission and the second uplink transmission are two consecutive uplink transmissions, and there is an interval of preset duration between the first uplink transmission and the second uplink transmission; and the terminal device performs the first uplink transmission and the second uplink transmission based on the uplink scheduling information.

With reference to the first aspect or the second aspect, in an implementation, a first timing advance associated with the first uplink transmission is different from a second timing advance associated with the second uplink transmission; or a first timing advance associated with the first uplink transmission is greater than a second timing advance associated with the second uplink transmission.

According to the foregoing method, when the first timing advance is different from the second timing advance, or the first timing advance is greater than the second timing advance, the first uplink transmission and the second uplink transmission may overlap in time domain. In this case, there is an interval between the two uplink transmissions scheduled by the network device, to avoid that the first uplink transmission and the second uplink transmission overlap in time domain, and avoid data transmission interruption.

With reference to the first aspect or the second aspect, in an implementation, the preset duration is determined based on at least one of the following: a frequency band used by the terminal device for an uplink transmission; a subcarrier spacing used by the terminal device for an uplink transmission; or a capability of the terminal device, where the capability of the terminal device indicates whether the terminal device supports a case in which a difference between two downlink timing references is greater than a length of a cyclic prefix, or the capability of the terminal device indicates that the terminal device supports two downlink timing references, and a difference between the two downlink timing references is greater than a length of a cyclic prefix.

With reference to the first aspect or the second aspect, in an implementation, the uplink scheduling information is used for scheduling the terminal device to perform the first uplink transmission in a first slot and perform the second uplink transmission in a second slot, the first slot is adjacent to the second slot, and the preset duration between a last symbol used for the first uplink transmission in the first slot and a 1st symbol used for the second uplink transmission in the second slot is duration corresponding to at least one symbol.

With reference to the first aspect or the second aspect, in an implementation, the first slot is before the second slot, and the first slot and the second slot scheduled by using the uplink scheduling information satisfy one or more of the following:

if the last symbol in the first slot is used for the first uplink transmission, a start symbol used for the second uplink transmission in the second slot is an $n^{th}$ symbol in the second slot, where n is an integer greater than 1; if the 1st symbol in the second slot is used for the second uplink transmission, there is an interval of k symbols between the last symbol used for the first uplink transmission in the first slot and the 1st symbol in the second slot, where k is an integer greater than 0; there is an interval of p symbols between the last symbol used for the first uplink transmission in the first slot and the 1st symbol in the second slot, where p is an integer greater than 0; there is an interval of q symbols between the 1st symbol used for the second uplink transmission in the second slot and the last symbol in the first slot, where q is an integer greater than 0; or there is an interval of m symbols between the last symbol used for the first uplink transmission in the first slot and the 1st symbol used for the second uplink transmission in the second slot, where m is an integer greater than 0.

With reference to the first aspect or the second aspect, in an implementation, the uplink scheduling information is used for scheduling the terminal device to perform the first uplink transmission and the second uplink transmission in one slot, and the preset duration between the first uplink transmission and the second uplink transmission is duration corresponding to at least one symbol.

With reference to the first aspect or the second aspect, in an implementation, the uplink scheduling information is used for scheduling the terminal device to perform a plurality of repeated transmissions, each of the plurality of repeated transmissions corresponds to a different slot, each of the plurality of repeated transmissions is located in one slot, the first uplink transmission and the second uplink transmission are two consecutive repeated transmissions in the plurality of repeated transmissions, the preset duration between the first uplink transmission and the second uplink transmission is duration corresponding to Nmax-L symbols, and a quantity L of symbols used for the repeated transmission in one slot is less than or equal to a maximum quantity Nmax of symbols included in one slot.

With reference to the first aspect or the second aspect, in an implementation, there is an interval of w symbols between a last symbol occupied by each of the plurality of repeated transmissions in a slot and a start symbol of a next slot of the slot, where w is an integer greater than or equal to 0; or there is an interval of x symbols between a 1st symbol occupied by each of the plurality of repeated transmissions in a slot and an end symbol of a previous slot of the slot, where x is an integer greater than or equal to 0; or there is an interval of a symbols between a 1st symbol occupied by each of the plurality of repeated transmissions in a slot and an end symbol of a previous slot of the slot, and there is an interval of b symbols between a last symbol occupied by each of the plurality of repeated transmissions in the slot and a start symbol of a next slot of the slot, where a and b are integers greater than or equal to 0.

With reference to the first aspect or the second aspect, in an implementation, the uplink scheduling information is used for scheduling the terminal device to perform a plurality of repeated transmissions in one slot, the first uplink transmission and the second uplink transmission are two consecutive repeated transmissions in the plurality of repeated transmissions, and the preset duration between the first uplink transmission and the second uplink transmission is duration corresponding to at least one symbol.

With reference to the first aspect or the second aspect, in an implementation, a quantity of repeated transmissions scheduled by using the uplink scheduling information is X, and the X repeated transmissions satisfy at least one of the following conditions: When X is greater than 2, the X repeated transmissions are respectively associated with a first timing advance and a second timing advance in a cyclic mapping manner. When X is equal to 2, the X repeated transmissions are associated with a first timing advance and a second timing advance, a 1st repeated transmission in the X repeated transmissions is associated with the first timing advance, and a 2nd repeated transmission in the X repeated transmissions is associated with the second timing advance, where the second timing advance is greater than the first timing advance, or a difference between the second timing advance and the first timing advance is greater than a length of one cyclic prefix.

When X is greater than 4, the X repeated transmissions are respectively associated with a first timing advance and a second timing advance in a sequential mapping manner. For example, in the X repeated transmissions, an $i^{th}$ repeated transmission to an $(i+y)^{th}$ repeated transmission are associated with the first timing advance, and an $(i+y+1)^{th}$ repeated transmission to an $(i+2y+1)^{th}$ repeated transmission are associated with the second timing advance. A value of y is a preset value, for example, y=2, and a value of i is 0, 1, 2, 3, .... For example, assuming that the quantity of repetitions is 8, and y=1, a $1^{st}$ repeated transmission and a $2^{nd}$ repeated transmission are associated with the first timing advance, a $3^{rd}$ repeated transmission and a $4^{th}$ repeated transmission are associated with the second timing advance, a $5^{th}$ repeated transmission and a $6^{th}$ repeated transmission are associated with the first timing advance, and a $7^{th}$ repeated transmission and an $8^{th}$ repeated transmission are associated with the second timing advance.

When X is less than or equal to 4, the X repeated transmissions are associated with a first timing advance and a second timing advance in a sequential mapping manner. First $\lceil X/2 \rceil$ repeated transmissions in the X repeated transmissions are associated with the first timing advance, and last $\lfloor X/2 \rfloor$ repeated transmissions in the X repeated transmissions are associated with the second timing advance; or first $\lfloor X/2 \rfloor$ repeated transmissions in the X repeated transmissions are associated with the first timing advance, and last $\lceil X/2 \rceil$ repeated transmissions in the X repeated transmissions are associated with the second timing advance, where $\lceil \ \rceil$ represents rounding up, and $\lfloor \ \rfloor$ represents rounding down. The second timing advance is greater than the first timing advance, or a difference between the second timing advance and the first timing advance is greater than a length of one cyclic prefix, and two adjacent repeated transmissions in the X repeated transmissions are associated with different timing advances.

With reference to the first aspect or the second aspect, in an implementation, the first uplink transmission and the second uplink transmission satisfy at least one of the following conditions: the first timing advance associated with the first uplink transmission is different from the second timing advance associated with the second uplink transmission; the second timing advance is greater than the first timing advance; a difference between the second timing advance and the first timing advance is greater than or equal to a length of one cyclic prefix;

a first difference between the second timing advance and the first timing advance is greater than a second difference between a downlink timing reference of the second uplink transmission and a downlink timing reference of the first uplink transmission; the first difference is greater than a sum of the second difference and a length of one cyclic prefix; start time of the second uplink transmission is less than end time of the first uplink transmission; or a third difference between the downlink timing reference of the second uplink transmission and the second timing advance is less than a sum of a fourth difference between the downlink timing reference of the first uplink transmission and the first timing advance and a time length of the first uplink transmission.

With reference to the first aspect or the second aspect, in an implementation, the terminal device satisfies at least one of the following conditions: not supporting an avoidance method; not supporting performing a plurality of uplink transmissions simultaneously; not supporting performing the first uplink transmission and the second uplink transmission simultaneously; not supporting performing the uplink transmissions simultaneously by using a beam or a resource associated with the first uplink transmission and a beam or a resource associated with the second uplink transmission; or not supporting a rollback from a multi-timing advance mode to a single-timing advance mode.

According to the foregoing method, when the foregoing condition is satisfied, there is an interval between two adjacent uplink transmissions that the terminal device is scheduled to perform, to avoid that the first uplink transmission and the second uplink transmission overlap in time domain.

With reference to the first aspect or the second aspect, in an implementation, the avoidance method includes one or more of the following:

delaying a transmission of data in the second uplink transmission by first duration, where the first duration is greater than or equal to second duration, and the second duration is duration of an overlapping area between the first uplink transmission and the second uplink transmission in time domain; advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, where a sum of the third duration and the fourth duration is greater than or equal to second duration; or performing a data transmission in the first uplink transmission and the second uplink transmission based on the first timing advance.

According to the foregoing method, when the first uplink transmission and the second uplink transmission overlap in time domain, a data transmission failure can be avoided, and data transmission efficiency can be improved.

According to a third aspect, this application provides an uplink scheduling method, including: A network device determines indication information, where the indication information indicates, when an adjacent first uplink transmission and second uplink transmission are respectively associated with different timing advances, a terminal device to perform an uplink transmission in one or more of the following manners: delaying a transmission of data in the second uplink transmission by first duration, where the first duration is greater than or equal to second duration, and the second duration is duration of an overlapping area between the first uplink transmission and the second uplink transmission in time domain; advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, where a sum of the third duration and the fourth duration is greater than or equal to second duration; or performing a data transmission in the first uplink transmission and the second uplink transmission based on a preset timing advance; and the network device sends the indication information to the terminal device.

According to the foregoing method, the network device indicates, by using the indication information, the terminal device to perform the first uplink transmission and the second uplink transmission according to the foregoing method, so that when the first uplink transmission and the second uplink transmission overlap in time domain, a data transmission failure can be avoided, and data transmission efficiency can be improved.

According to a fourth aspect, this application provides an uplink scheduling method, including: A terminal device receives indication information from a network device, where the indication information indicates, when an adjacent first uplink transmission and second uplink transmission are respectively associated with different timing advances, the terminal device to perform an uplink transmission in one or more of the following manners: delaying a transmission of data in the second uplink transmission by first duration, where the first duration is greater than or equal to second duration, and the second duration is duration of an overlapping area between the first uplink transmission and the second uplink transmission in time domain; advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, where a sum of the third duration and the fourth duration is greater than or equal to second duration; or performing a data transmission in the first uplink transmission and the second uplink transmission based on a preset timing advance; and the terminal device performs an uplink transmission based on the indication information.

With reference to the third aspect or the fourth aspect, in an implementation, the network device receives capability information from the terminal device, where the capability information indicates that a capability of the terminal device includes at least one of the following: not supporting performing a plurality of uplink transmissions simultaneously;

not supporting performing the first uplink transmission and the second uplink transmission simultaneously; not supporting performing the uplink transmissions simultaneously by using a beam or a resource associated with the first uplink transmission and a beam or a resource associated with the second uplink transmission; or not supporting a rollback from a multi-timing advance mode to a single-timing advance mode.

With reference to the third aspect or the fourth aspect, in an implementation, the preset timing advance is configured by the network device, or the preset timing advance is determined based on at least one of a first timing advance and a second timing advance, the first timing advance is associated with the first uplink transmission, and the second timing advance is associated with the second uplink transmission.

With reference to the third aspect or the fourth aspect, in an implementation, a first timing advance associated with the first uplink transmission is different from a second timing advance associated with the second uplink transmission; or a first timing advance associated with the first uplink transmission is greater than a second timing advance associated with the second uplink transmission.

According to a fifth aspect, an embodiment of this application provides a communication apparatus. The apparatus may be used in a network device, and has a function of implementing the method performed by the network device in the first aspect or the third aspect. The function may be implemented by hardware, or may be implemented by hardware executing corresponding software. The hardware or the software includes one or more units corresponding to the function. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

In an implementation, the communication apparatus is a communication chip, and the transceiver unit may be an input/output circuit or a port, an interface circuit, an output circuit, an input circuit, a pin, a related circuit, or the like of the communication chip. The processing unit may be a processing circuit or a logic circuit of the communication chip.

According to a sixth aspect, an embodiment of this application provides a communication apparatus. The apparatus may be used in a terminal device, and has a function of implementing the method performed by the terminal device in the second aspect or the fourth aspect. The function may be implemented by hardware, or may be implemented by hardware executing corresponding software. The hardware or the software includes one or more units corresponding to the function. For example, a transceiver unit and a processing unit are included. The transceiver unit may also be referred to as a communication unit or a transceiver module. The transceiver unit may specifically include a receiving unit and a sending unit. The processing unit may also be referred to as a processing module.

In an implementation, the communication apparatus is a communication chip, and the transceiver unit may be an input/output circuit or a port, an interface circuit, an output circuit, an input circuit, a pin, a related circuit, or the like of the communication chip. The processing unit may be a processing circuit or a logic circuit of the communication chip.

According to a seventh aspect, an embodiment of this application provides a communication apparatus. The communication apparatus includes a processor and a memory. The memory stores a computer program or computer instructions, and the processor is configured to invoke and run the computer program or the computer instructions stored in the memory, to enable the processor to implement any one of the possible implementations in the first aspect to the fourth aspect.

In an implementation, the communication apparatus further includes an interface circuit, and the processor is configured to control the interface circuit to receive and send signals, information, data, and/or the like.

According to an eighth aspect, an embodiment of this application provides a communication apparatus. The communication apparatus includes a processor. The processor is configured to invoke a computer program or computer instructions in a memory, to enable the processor to implement any one of the possible implementations in the first aspect to the fourth aspect.

In an implementation, the communication apparatus further includes an interface circuit, and the processor is configured to control the interface circuit to receive and send signals, information, data, and/or the like.

According to a ninth aspect, an embodiment of this application further provides a computer program product including instructions. When the computer program product runs on a computer, the computer is enabled to perform any one of the possible implementations in the first aspect to the fourth aspect.

According to a tenth aspect, an embodiment of this application further provides a computer-readable storage medium, including computer instructions. When the instructions are run on a computer, the computer is enabled to perform any one of the possible implementations in the first aspect to the fourth aspect.

According to an eleventh aspect, an embodiment of this application further provides a chip apparatus, including a processor, configured to invoke a computer program or computer instructions in a memory, to enable the processor to perform any one of the possible implementations in the first aspect to the fourth aspect.

In an implementation, the processor is coupled to the memory via an interface.

According to a twelfth aspect, an embodiment of this application provides a communication system. The communication system includes the communication apparatus (for example, the network device) according to the fifth aspect and the communication apparatus (for example, the terminal device) according to the sixth aspect.

These aspects or other aspects of this application are clearer and more comprehensible in descriptions of the following embodiments.

BRIEF DESCRIPTION OF DRAWINGS

FIG. 1 is a diagram of a physical uplink shared channel repeated transmission according to an embodiment of this application;
FIG. 2 is a diagram of a physical uplink shared channel repeated transmission according to an embodiment of this application;
FIG. 3 is a diagram of a transmission in a cyclic mapping manner according to an embodiment of this application;
FIG. 4 is a diagram of a transmission in a sequential mapping manner according to an embodiment of this application;
FIG. 5 is a diagram of a scheduling transmission according to an embodiment of this application;
FIG. 6 is a diagram of a multi-site transmission mode according to an embodiment of this application;
FIG. 7 is a diagram of a multi-TA transmission mode according to an embodiment of this application;
FIG. 8 is a schematic flowchart of an uplink scheduling method according to an embodiment of this application;
FIG. 9 is a schematic flowchart of an uplink scheduling method according to an embodiment of this application;
FIG. 10 is a schematic flowchart of an uplink scheduling method according to an embodiment of this application;
FIG. 11 is a diagram of a structure of a communication apparatus according to an embodiment of this application; and

FIG. 12 is a diagram of a structure of a communication apparatus according to an embodiment of this application.

DESCRIPTION OF EMBODIMENTS

The following describes embodiments of this application in detail with reference to the accompanying drawings of the specification.

A communication method provided in embodiments of this application may be applied to a 4th generation (4th generation, 4G) communication system, for example, long term evolution (long term evolution, LTE), or may be applied to a 5th generation (5th generation, 5G) communication system, for example, 5G new radio (new radio, NR), or applied to various future communication systems, for example, a 6th generation (6th generation, 6G) communication system.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

The following first describes some terms in embodiments of this application, to facilitate understanding of a person skilled in the art.

The network device in embodiments of this application may be a device in a wireless network. For example, the network device may be a device that is deployed in a radio access network and that provides a wireless communication function for a terminal device. For example, the network device may be a radio access network (radio access network, RAN) node that connects a terminal device to a wireless network, and may also be referred to as an access network device.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP), a radio relay node, a radio backhaul node, a transmission point (transmission point, TP), or a transmission reception point (transmission reception point, TRP) in a wireless fidelity (wireless fidelity, Wi-Fi) system, or the like. Alternatively, the network device may be a network device in a 5G mobile communication system, for example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system. Alternatively, the network device may be a network node that forms a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, or an AAU node. In addition, the CU may be classified as a network device in the RAN, or a network device in a core network (core network, CN). This is not limited in this application.

The terminal device in embodiments of this application may be a wireless terminal device that can receive scheduling and indication information of the network device. The terminal device may be a device that provides a user with voice and/or data connectivity, a handheld device with a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing voice/data connectivity to a user), for example, a handheld device or a vehicle-mounted device having a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in Internet of Vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the Internet of Vehicles may be an in-vehicle device, an entire vehicle device, an in-vehicle module, a vehicle, or the like. The wireless terminal in the industrial control may be a camera, a robot, or the like. The wireless terminal in the smart home may be a television, an air conditioner, a sweeper robot, a speaker, a set-top box, or the like.

In this application, a symbol may be an orthogonal frequency division multiplexing (orthogonal frequency division multiplexing, OFDM) symbol or the like, and is referred to as a symbol for short below. If one symbol is used for an uplink transmission, it may be referred to as an uplink symbol for short. If one symbol is used for a downlink transmission, it may be referred to as a downlink symbol for short. During a data transmission, a guard interval is introduced into one symbol, and a cyclic prefix (cyclic prefix, CP) is inserted into the symbol. In other words, one symbol includes a CP and a symbol corresponding to actually transmitted data.

A beam in embodiments of this application is a communication resource. The beam may be a wide beam, a narrow beam, or a beam of another type, and a technology for forming a beam may be a beamforming technology or another technical means. The beamforming technology may be specifically a digital beamforming technology, an analog beamforming technology, and a hybrid digital/analog beamforming technology. Different beams may be considered as different resources.

The beam may be referred to as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (quasi-colocation, QCL) information, a QCL assumption, a QCL indication, or the like. The beam may be indicated by a transmission configuration indicator state (transmission configuration indicator state, TCI-state) parameter or a spatial relation (spatial relation) parameter. Therefore, in this application, the beam may be replaced with a transmission direction, the spatial domain filter, the spatial filter, the spatial domain parameter, the spatial parameter, the spatial domain setting, the spatial setting, the QCL information, the QCL assumption, the QCL indication, a TCI-state (including an uplink TCI-state and a downlink TCI-state), a spatial relation, or the like. The foregoing terms are also equivalent to each other. Alternatively, the beam may be replaced with another term for representing a beam. This is not limited in this application.

Inter-slot scheduling means that the network device schedules a plurality of uplink transmissions, each uplink transmission is located in one or a plurality of different slots, and two different uplink transmissions are located in at least two different slots. Scheduling between adjacent slots means that two uplink transmissions are respectively located in two adjacent slots. Each uplink transmission may be scheduled by using one piece of scheduling information, and different uplink transmissions are scheduled by using different scheduling information.

Intra-slot scheduling means that the network device schedules a plurality of uplink transmissions in one slot. Each uplink transmission may be scheduled by using one piece of scheduling information, and different uplink transmissions are scheduled by using different scheduling information.

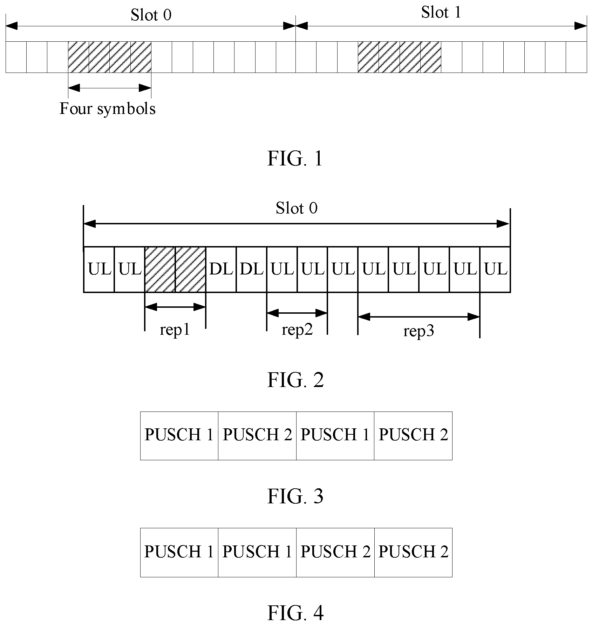

A physical uplink shared channel (physical uplink shared channel, PUSCH) time division multiplexing (time division multiplexing, TDM) repeated (repetition) transmission: that is, a PUSCH time-domain repeated transmission, which may also be referred to as a PUSCH repeated transmission, and means that a PUSCH is repeatedly sent on different time-domain resources. The PUSCH time-domain repeated transmission includes two resource allocation modes: a PUSCH repetition type A (PUSCH repetition type A) and a PUSCH repetition type B (PUSCH repetition type B). The PUSCH repetition type A is an inter-slot repetition. The terminal device sends a same transport block (transport block, TB) in K consecutive slots. The TB whose transmission is performed in each slot corresponds to a different redundancy version (redundancy version, RV). A TB in each repeated transmission occupies a same symbol location in each of the K slots. In other words, both start symbol locations S and occupied symbol lengths L in the slots are the same, and S+L is less than or equal to a quantity of symbols included in one slot. For example, as shown in FIG. 1, a TB corresponding to a PUSCH starts to be transmitted on a symbol 3 in each slot, and occupies four symbols in each slot.

The PUSCH repetition type B is an intra-slot repetition. To be specific, one or more copies (that is, redundancy versions) corresponding to one TB may be repeatedly sent in one slot, or a transmission of two or more actual (actual) PUSCH copies may be performed in a plurality of consecutive available slots. For example, as shown in FIG. 2, a nominal (nominal) repetition quantity configured by a network side for the terminal device is 2. If a repeated transmission crossing a slot boundary or a downlink (downlink, DL)/uplink (uplink, UL) switch point exists, the repeated transmission at the slot boundary or the switch point is split into a plurality of "actual" repetitions. Therefore, an actual repetition quantity may be greater than the indicated value. In FIG. 2, UL represents an uplink symbol, and DL represents a downlink symbol. It is assumed that each repeated transmission occupies four symbols. In FIG. 2, a first repeated transmission crosses a DL/UL switch point. Therefore, the first repeated transmission is split into two "actual" repetitions, in other words, the first repeated transmission is split into a repeated transmission 1 (corresponding to rep1 in the figure) and a repeated transmission 2 (corresponding to rep2 in the figure). There is an interval of two downlink symbols between the repeated transmission 1 and the repeated transmission 2. The repeated transmission 1 and the repeated transmission 2 each occupy two symbols, and occupy four symbols in total. However, a 2nd repeated transmission (that is, a repeated transmission 3, corresponding to rep3 in the figure) does not cross a DL/UL switch point, and occupies four consecutive symbols.

A physical uplink control channel (physical uplink control channel, PUCCH) TDM repeated transmission: that is, a PUCCH time-domain repeated transmission, which may also be referred to as a PUCCH repeated transmission, and means that a PUCCH is repeatedly sent on different time domain resources. A specific transmission manner is similar to that of the PUSCH repeated transmission. For details, refer to the descriptions in the PUSCH repeated transmission. Details are not described herein again.

In a multi-TRP (multi-TRP, M-TRP) scenario, an M-TRP PUSCH/PUCCH time-domain repeated transmission is introduced. The M-TRP PUSCH/PUCCH time-domain repeated transmission is an extension based on the two repetition types described above. Sounding reference signal (sounding reference signal, SRS) resource sets (resource sets) of a plurality of TRPs are mapped to the PUSCH/PUCCH repeated transmission. When a quantity of repetitions is greater than 2, two manners of cyclic mapping (cyclic mapping) and sequential mapping (sequential mapping) are supported. In an example of the PUSCH repeated transmission, two beams are activated during the PUSCH repeated transmission, and each beam corresponds to one TRP. A PUSCH 1 is associated with an SRS resource set 1 (TPR 1 or beam 1), and a PUSCH 2 is associated with an SRS resource set 2 (TPR 2 or beam 2). As shown in FIG. 3, if the cyclic mapping manner is used, during each repeated transmission, beams (or SRS resource sets) are alternately mapped to different repeated transmissions. It is assumed that four repeated transmissions are performed, a 1st repeated transmission and a 3rd repeated transmission correspond to a beam #1, and a 2nd repeated transmission and a 4th repeated transmission correspond to a beam #2, in other words, mapping is performed in a manner of 1, 2, 1, 2. During the 1st repeated transmission and the 3rd repeated transmission, a repeated transmission of the PUSCH 1 is performed through the beam #1 (or the SRS resource set 1); and during the 2nd repeated transmission and the 4th repeated transmission, a repeated transmission of the PUSCH 2 is performed through the beam #2 (or the SRS resource set 2).

As shown in FIG. 4, if the sequential mapping manner is used, during each repeated transmission, beams (or SRS resource sets) are sequentially mapped to different repeated transmissions. It is assumed that four repeated transmissions are performed, a 1st repeated transmission and a 2nd repeated transmission correspond to a beam #1, and a 3rd repeated transmission and a 4th repeated transmission correspond to a beam #2, in other words, mapping is performed in a manner of 1, 1, 2, 2. During the 1st repeated transmission and the 2nd repeated transmission, a repeated transmission of the PUSCH 1 is performed through the beam #1 (or the SRS resource set 1); and during the 3rd repeated transmission and the 4th repeated transmission, a repeated transmission of the PUSCH 2 is performed through the beam #2 (or the SRS resource set 2).

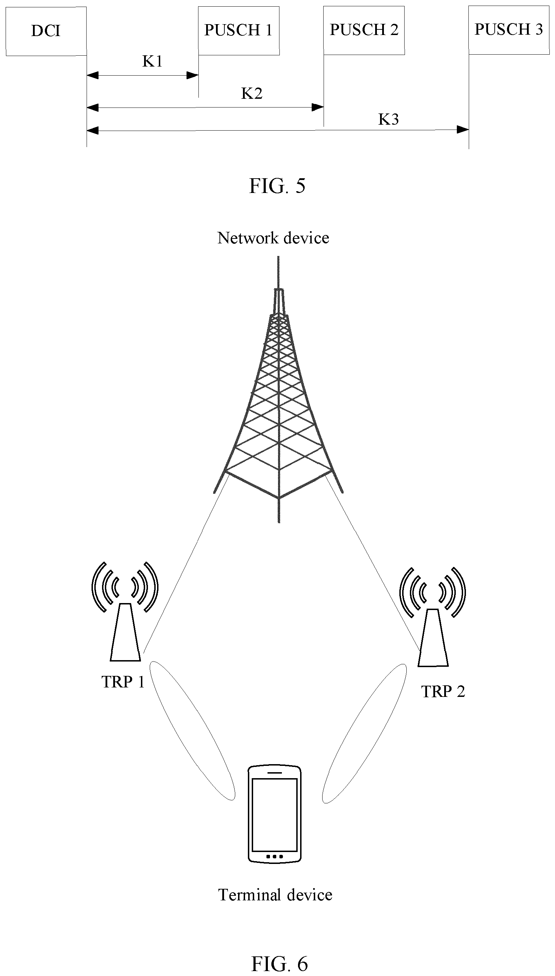

A plurality of (multiple) PUSCHs are scheduled by using a single piece of downlink control information (downlink control information, DCI): In comparison with one PUSCH transmission being scheduled by using one piece of DCI each time, when the plurality of PUSCHs are scheduled by using the single piece of DCI, a plurality of PUSCHs can be scheduled by using one piece of DCI for a transmission in consecutive/non-consecutive slots, and the transmission of the plurality of PUSCHs is not a repeated transmission. The single piece of DCI may indicate information such as a slot in which each PUSCH is located after DCI scheduling, a start symbol location of the slot in which each PUSCH is located, and an occupied symbol length. For example, as shown in FIG. 5, three PUSCHs are scheduled by using one piece of DCI. The DCI may indicate that a PUSCH 1 is located in a $(K1)^{th}$ slot after the DCI, a PUSCH 2 is located in a $(K2)^{th}$ slot after the DCI, and a PUSCH 3 is located in a $(K3)^{th}$ slot after the DCI.

A multi-site transmission mode is a mode in which a terminal device communicates with a plurality of TRPs simultaneously, and is referred to as a multi-site transmission mode or a multi-TRP transmission mode. When the terminal device supports communicating with a plurality of TRPs simultaneously, the plurality of TRPs may belong to a same cell, or may belong to different cells. FIG. 6 is a diagram of a multi-site transmission mode according to an embodiment of this application. In the figure, two TRPs: a TRP 1 and a TRP 2 are used as an example. The TRP 1 and the TRP 2 in the figure belong to a same cell, in other words, the TRP 1 and the TRP 2 belong to a same network device. A communication system may further include another network entity like a network controller and a mobility management entity. This is not limited in embodiments of this application.

It should be understood that FIG. 6 shows an example of a network device and a terminal device. The communication system may include a plurality of network devices, and a signal coverage area of each network device may include at least one terminal device. This is not limited in this application.

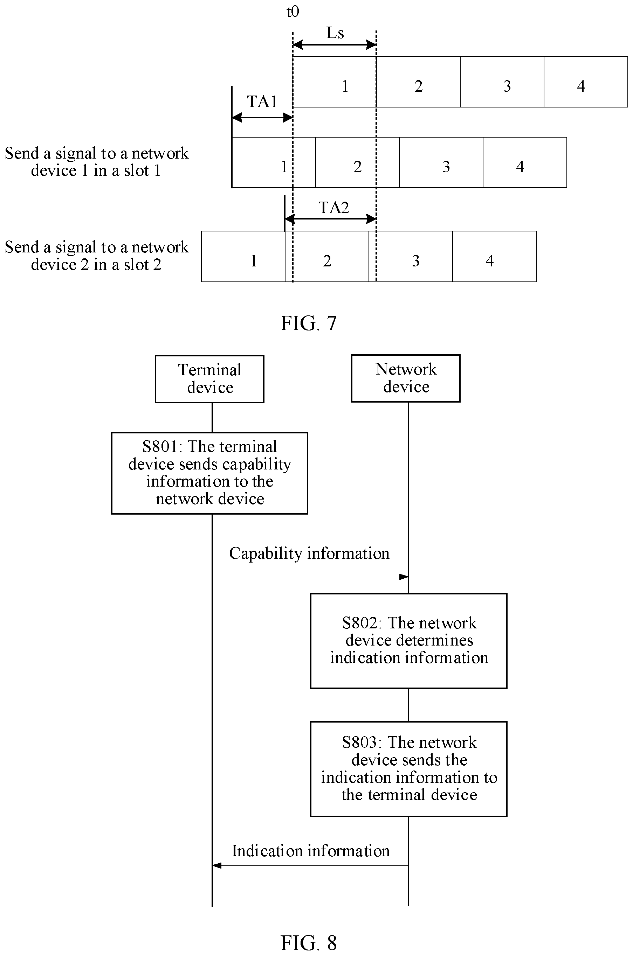

In a multi-site transmission scenario, a plurality of TAs may be introduced. However, when uplink transmissions in adjacent slots or symbols are associated with different TAs, the two transmissions may overlap. For example, as shown in FIG. 7, it is assumed that TA1 is less than TA2, and a length of one slot is Ls; and for a network device 1 and a network device 2, a start moment of a slot 1 is t0. When a terminal device sends an uplink signal to the network device 1 in the slot 1 by using TA1, to ensure that the network device 1 can receive the signal in the slot 1 at the moment t0, on a terminal device side, a start moment of the slot 1 is t0-TA1, and the terminal device sends the signal in the slot 1 at the moment t0-TA1. When the terminal device sends an uplink signal to the network device 2 in a slot 2 by using the TA2, on the terminal device side, a start moment of the slot 2 is t0-TA2+Ls, and the terminal device sends the signal in the slot 2 at the moment t0-TA2+Ls. On the terminal device side, an end moment of the slot 1 is t0-TA1+Ls, and is at the start moment of the slot 2. In other words, slot overlapping exists between the slot 1 and the slot 2. When the terminal device does not have a simultaneous transmission capability, the terminal device can send a signal only to one network device in an overlapping part. Consequently, a data transmission is incomplete, resulting in a data transmission failure.

Therefore, this application provides a method, to resolve a problem that two consecutive transmissions overlap in a multi-TA scenario.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

FIG. 8 is a schematic flowchart of an uplink scheduling method according to an embodiment of this application. The method includes the following steps.

S801: A terminal device sends capability information to a network device. Correspondingly, the network device receives the capability information from the terminal device.

In an implementation, that the capability information indicates a capability of the terminal device includes at least one of the following:

whether performing a plurality of uplink transmissions simultaneously is supported, in other words, whether the terminal device supports performing transmissions simultaneously by using a plurality of beams or resources;

whether performing uplink transmissions simultaneously by using a plurality of TAs is supported, where each uplink transmission corresponds to a different TA, for example, a first uplink transmission and a second uplink transmission are two consecutive uplink transmissions, a TA associated with the first uplink transmission is different from a TA associated with the second uplink transmission, in other words, whether the terminal device supports performing the first uplink transmission and the second uplink transmission simultaneously;

whether performing uplink transmissions simultaneously by using a beam or a resource associated with a first uplink transmission and a beam or a resource associated with a second uplink transmission, in other words, the terminal device reports whether transmissions can be performed simultaneously by using a beam group, for example, a beam 1 associated with the first uplink transmission and a beam 2 associated with the second uplink transmission correspond to a same panel of the terminal device, and performing the first uplink transmission and the second uplink transmission simultaneously is not supported; for example, a beam 1 associated with the first uplink transmission and a beam 3 associated with the second uplink transmission correspond to different panels of the terminal device, and performing the first uplink transmission and the second uplink transmission simultaneously is supported;

whether a rollback from a multi-timing advance mode to a single-timing advance mode is supported, in other words, whether the terminal device can perform, when adjacent uplink transmissions overlap due to being associated with different TAs, the uplink transmissions by using a same TA;

when an adjacent first uplink transmission and second uplink transmission are respectively associated with different timing advances, delaying a transmission of data in the second uplink transmission by first duration is supported;

when an adjacent first uplink transmission and second uplink transmission are respectively associated with different timing advances, advancing a transmission of data in the first uplink transmission by first duration is supported;

when an adjacent first uplink transmission and second uplink transmission are respectively associated with different timing advances, stopping transmission of data in an overlapping area in the first uplink transmission is supported when a data transmission is performed in the first uplink transmission;

when an adjacent first uplink transmission and second uplink transmission are respectively associated with different timing advances, stopping transmission of data in an overlapping area in the second uplink transmission is supported when a data transmission is performed in the second uplink transmission; or

when an adjacent first uplink transmission and second uplink transmission are respectively associated with different timing advances, advancing a transmission of data in the first uplink transmission by third duration and delaying a transmission of data in the second uplink transmission by fourth duration are supported.

For whether the terminal device supports an avoidance method, refer to the following descriptions for the avoidance method.

S801 is an optional step. The terminal device may determine, based on an actual situation, whether to send the capability information. This is not limited in this application.

S802: The network device determines indication information.

In an implementation, the network device generates the indication information when determining that the capability of the terminal device includes at least one of the following:

The terminal device does not support performing a plurality of uplink transmissions simultaneously;

the terminal device does not support performing uplink transmissions simultaneously by using a plurality of TAs, for example, when a first timing advance associated with a first uplink transmission is different from a second timing advance associated with a second uplink transmission, the terminal device does not support performing the first uplink transmission and the second uplink transmission simultaneously, where the first uplink transmission being associated with the first timing advance represents that a timing advance used by the terminal device when the terminal device performs the first uplink transmission is the first timing advance;

performing uplink transmissions simultaneously by using a beam or a resource associated with a first uplink transmission and a beam or a resource associated with a second uplink transmission is not supported;

the terminal device does not support a rollback from a multi-timing advance mode to a single-timing advance mode; or

the terminal device supports an avoidance method.

For example, the network device may determine the capability of the terminal device based on the capability information of the terminal device, or may determine the capability of the terminal device in another manner. This is not limited in this application.

In this application, the indication information indicates, when an adjacent first uplink transmission and second uplink transmission are respectively associated with different timing advances, the terminal device to perform an uplink transmission in one or more of the following manners, that is, use at least one of the following avoidance methods.

Method 1: The transmission of the data in the second uplink transmission is delayed by first duration, where the first duration is greater than or equal to second duration, and the second duration is duration of an overlapping area between the first uplink transmission and the second uplink transmission in time domain. In this way, it can be avoided that the first uplink transmission and the second uplink transmission overlap in time domain, so that data in the first uplink transmission is transmitted in time, and the data in the second uplink transmission can also be successfully transmitted. A transmission of the data in the second uplink transmission is delayed, and duration of the delay may be a length of an overlapping part in time domain.

Method 2: The transmission of the data in the first uplink transmission is advanced by the first duration. In this way, it can be avoided that the first uplink transmission and the second uplink transmission overlap in time domain, and the data in the second uplink transmission can be transmitted in time.

Method 3: When the data transmission is performed in the first uplink transmission, the transmission of the data in the overlapping area in the first uplink transmission is stopped. In this way, the second uplink transmission can be preferentially completed.

Method 4: When the data transmission is performed in the second uplink transmission, the transmission of the data in the overlapping area in the second uplink transmission is stopped. In this way, the first uplink transmission can be preferentially completed.

Method 5: The transmission of the data in the first uplink transmission is advanced by third duration and the transmission of the data in the second uplink transmission is delayed by fourth duration, where a sum of the third duration and the fourth duration is greater than or equal to the second duration. In this way, it can be avoided that the first uplink transmission and the second uplink transmission overlap in time domain.

Method 6: The data transmission is performed in the first uplink transmission and the second uplink transmission based on a preset timing advance, where the preset timing advance is configured by the network device, or the preset timing advance is determined based on at least one of a first timing advance and a second timing advance, the first timing advance is associated with the first uplink transmission, and the second timing advance is associated with the second uplink transmission. For example, the preset timing advance is equal to an average value of the first timing advance and the second timing advance.

In an implementation, the first duration, the third duration, and the fourth duration may be lengths of overlapping between the first uplink transmission and the second uplink transmission.

In an implementation, the length of the overlapping area, the first duration, the second duration, the third duration, and the fourth duration may be determined based on at least one of the following:

a first frequency band used by the terminal device for an uplink transmission, a first subcarrier spacing used by the terminal device for an uplink transmission, or a first capability of the terminal device, where the first capability indicates whether the terminal device supports a case in which a difference between two downlink timing references is greater than a length of a cyclic prefix, or the first capability indicates that the terminal device supports two downlink timing references, and a difference between the two downlink timing references is greater than a length of a cyclic prefix.

The first frequency band is a frequency band in which the terminal device performs an uplink transmission. The first frequency band may be located in a frequency range 1 (frequency range 1, FR1), or may be located in an FR2, or may be located in another frequency range. This is not limited in this application.

The first subcarrier spacing may be 15 kHz, 30 kHz, 60 kHz, 120 kHz, or the like. This is not limited in this application.

The network device may configure two downlink timing references for a downlink transmission for the terminal device. Whether a difference between the two downlink timing references can be greater than a length of one cyclic prefix is determined by the capability of the terminal device. If the terminal device supports the case in which the difference between the two downlink timing references is greater than the length of the cyclic prefix, the terminal device may indicate, to the network device by using the first capability, that the terminal device supports the case in which the difference between the two downlink timing references is greater than the length of the cyclic prefix. If the terminal device does not support the case in which the difference between the two downlink timing references is greater than the length of the cyclic prefix, the terminal device may indicate, to the network device by using the first capability, that the terminal device does not support the case in which the difference between the two downlink timing references is greater than the length of the cyclic prefix. For a specific value of the length of the cyclic prefix, refer to a definition in a communication system such as an LTE system or an NR system. Details are not described herein.

In this implementation, the length of the overlapping area, the first duration, the second duration, the third duration, and the fourth duration may be greater than or equal to a length of one symbol.

For example, when the first frequency band is located in the FR1, the first subcarrier spacing is 60 kHz, and the first capability indicates that the terminal device supports the case in which the difference between the two downlink timing references is greater than the length of the cyclic prefix, the length of the overlapping area, the first duration, the second duration, the third duration, and the fourth duration may be equal to a length of two symbols.

For example, when the first capability indicates that the terminal device does not support the case in which the difference between the two downlink timing references is greater than the length of the cyclic prefix, the length of the overlapping area, the first duration, the second duration, the third duration, and the fourth duration may be equal to a length of one symbol.

For example, when the first frequency band is not located in the FR1 and/or the first subcarrier spacing is not 60 kHz, and the first capability indicates that the terminal device supports the case in which the difference between the two downlink timing references is greater than the length of the cyclic prefix, the length of the overlapping area, the first duration, the second duration, the third duration, and the fourth duration may be equal to a length of one symbol.

For example, when the first subcarrier spacing is 15 kHz, 30 kHz, or 120 kHz, the length of the overlapping area, the first duration, the second duration, the third duration, and the fourth duration may be equal to a length of one symbol.

For example, when the first frequency band is the FR2, the length of the overlapping area, the first duration, the second duration, the third duration, and the fourth duration may be equal to a length of one symbol.

For example, when the first capability indicates that the terminal device supports the case in which the difference between the two downlink timing references is greater than the length of the cyclic prefix, the length of the overlapping area, the first duration, the second duration, the third duration, and the fourth duration may be equal to a length of two symbols. In an implementation, if the first uplink transmission and the second uplink transmission are two consecutive uplink transmissions, and the first uplink transmission is performed before the second uplink transmission, the indication information sent by the network device may take effect when at least one of the following conditions is satisfied.

Condition 1: A first timing advance associated with the first uplink transmission is different from a second timing advance associated with the second uplink transmission.

Condition 2: The second timing advance is greater than the first timing advance.

Condition 3: A difference between the second timing advance and the first timing advance is greater than or equal to a length of one cyclic prefix.

Condition 4: A first difference between the second timing advance and the first timing advance is greater than a second difference between a downlink timing reference of the second uplink transmission and a downlink timing reference of the first uplink transmission.

Condition 5: The first difference is greater than a sum of the second difference and a length of one cyclic prefix.

Condition 6: Start time of the second uplink transmission is less than end time of the first uplink transmission.

Condition 7: A third difference between the downlink timing reference of the second uplink transmission and the second timing advance is less than a sum of a fourth difference between the downlink timing reference of the first uplink transmission and the first timing advance and a time length of the first uplink transmission.

Condition 8: The first timing advance associated with the first uplink transmission is less than the second timing advance associated with the second uplink transmission.

In other words, if at least one of the foregoing conditions is satisfied, the terminal device performs any one of the foregoing avoidance methods indicated by the indication information. If the first uplink transmission is performed after the second uplink transmission, or the first timing advance is greater than or equal to the second timing advance, the terminal device may not perform any one of the foregoing avoidance methods indicated by the indication information.

S803: The network device sends the indication information to the terminal device. Correspondingly, the terminal device receives the indication information from the network device.

The network device may send the indication information by using RRC signaling, or may send the indication information by using a MAC control element (control element, CE), or may send the indication information in another manner. This is not limited in this application.

The terminal device may perform an uplink transmission based on the indication information. For example, if an adjacent first uplink transmission and second uplink transmission are respectively associated with different timing advances, the terminal device may delay a transmission of data in the second uplink transmission by first duration, to avoid that the first uplink transmission and the second uplink transmission overlap in time domain.

In an implementation, the network device may not send the indication information. When the capability of the terminal device includes at least one of the capabilities described in S802, when the first uplink transmission and the second uplink transmission are associated with different timing advances, the terminal device may perform an uplink transmission according to any one of the foregoing method 1 to method 6. A specific process is not described again.

According to the foregoing method, the network device indicates, by using the indication information, the terminal device how to perform the first uplink transmission and the second uplink transmission, to avoid that the first uplink transmission and the second uplink transmission overlap in time domain, thereby avoiding a data transmission failure.

In this application, when the network device schedules the terminal device to perform an uplink transmission, there may be an interval between two adjacent uplink transmissions of the terminal device, to avoid that the first uplink transmission and the second uplink transmission overlap in time domain. Details are described below.

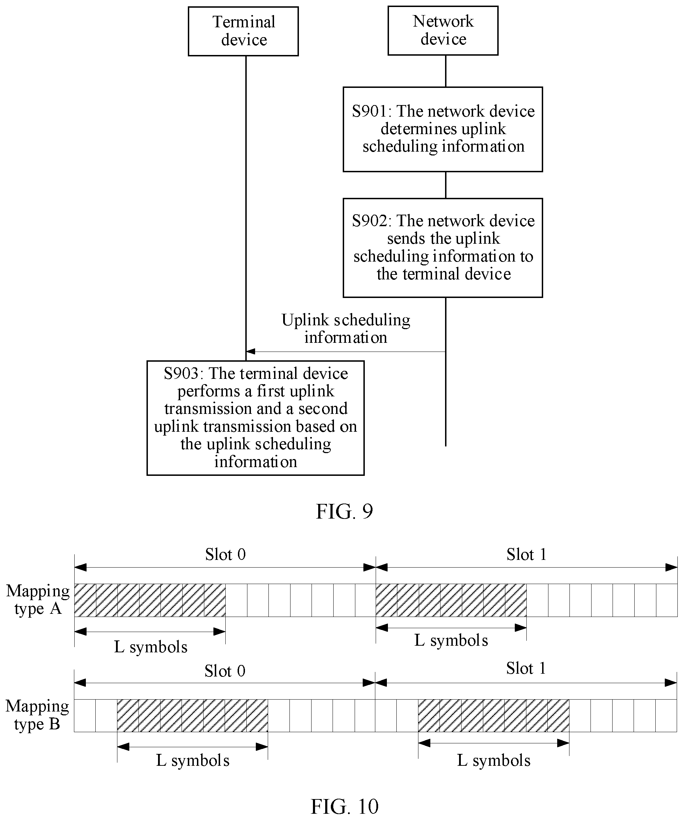

FIG. 9 is a schematic flowchart of an uplink scheduling method according to an embodiment of this application. The method includes the following steps.

S901: A network device determines uplink scheduling information.

The uplink scheduling information is used for scheduling a terminal device to perform a first uplink transmission and a second uplink transmission, and the first uplink transmission and the second uplink transmission are two consecutive uplink transmissions

In this application, an example in which the first uplink transmission is performed before the second uplink transmission is used for description. In other words, the terminal device first performs the first uplink transmission, and then performs the second uplink transmission. The first uplink transmission is associated with a first timing advance, and the second uplink transmission is associated with a second timing advance.

In an implementation, there is an interval of preset duration between the first uplink transmission and the second uplink transmission. In this application, that there is an interval of preset duration between the first uplink transmission and the second uplink transmission means that there is the interval of the preset duration between an end moment of the first uplink transmission and a start moment of the second uplink transmission. Details are not described one by one below. In an implementation, the preset duration between the first uplink transmission and the second uplink transmission may be determined based on at least one of the following: a first frequency band used by the terminal device for an uplink transmission, a first subcarrier spacing used by the terminal device for an uplink transmission, or a first capability of the terminal device, where the first capability indicates whether the terminal device supports a case in which a difference between two downlink timing references is greater than a length of a cyclic prefix, or the first capability indicates that the terminal device supports two downlink timing references, and a difference between the two downlink timing references is greater than a length of a cyclic prefix.

The first frequency band is a frequency band in which the terminal device performs an uplink transmission. The first frequency band may be located in a frequency range 1 (frequency range 1, FR1), or may be located in an FR2, or may be located in another frequency range. This is not limited in this application.

The first subcarrier spacing may be 15 kHz, 30 kHz, 60 kHz, 120 kHz, or the like. This is not limited in this application.

The network device may configure two downlink timing references for a downlink transmission for the terminal device. Whether a difference between the two downlink timing references can be greater than a length of one cyclic prefix is determined by the capability of the terminal device. If the terminal device supports the case in which the difference between the two downlink timing references is greater than the length of the cyclic prefix, the terminal device may indicate, to the network device by using the first capability, that the terminal device supports the case in which the difference between the two downlink timing references is greater than the length of the cyclic prefix. If the terminal device does not support the case in which the difference between the two downlink timing references is greater than the length of the cyclic prefix, the terminal device may indicate, to the network device by using the first capability, that the terminal device does not support the case in which the difference between the two downlink timing references is greater than the length of the cyclic prefix. For a specific value of the length of the cyclic prefix, refer to a definition in a communication system such as an LTE system or an NR system. Details are not described herein.

In this implementation, the preset duration may be greater than or equal to a length of one symbol.

For example, when the first frequency band is located in the FR1, the first subcarrier spacing is 60 kHz, and the first capability indicates that the terminal device supports the case in which the difference between the two downlink timing references is greater than the length of the cyclic prefix, the preset duration may be equal to a length of two symbols, in other words, n, k, p, q, and m are 2.

For example, when the first capability indicates that the terminal device does not support the case in which the difference between the two downlink timing references is greater than the length of the cyclic prefix, the preset duration may be equal to a length of one symbol, in other words, values of n, k, p, q, and m in this application may be 1.

For example, when the first frequency band is not located in the FR1 and/or the first subcarrier spacing is not 60 kHz, and the first capability indicates that the terminal device supports the case in which the difference between the two downlink timing references is greater than the length of the cyclic prefix, the preset duration may be equal to a length of one symbol, in other words, values of n, k, p, q, and m in this application may be 1.

For example, when the first subcarrier spacing is 15 kHz, 30 kHz, or 120 kHz, the preset duration may be equal to a length of one symbol, in other words, values of n, k, p, q, and m in this application may be 1.

For example, when the first frequency band is the FR2, the preset duration may be equal to a length of one symbol, in other words, values of n, k, p, q, and m in this application may be 1.

For example, when the first capability indicates that the terminal device supports the case in which the difference between the two downlink timing references is greater than the length of the cyclic prefix, the preset duration may be equal to a length of two symbols, in other words, values of n, k, p, q, and m in this application may be 2.

In an implementation, the preset duration between the first uplink transmission and the second uplink transmission may be agreed on in a protocol, or may be configured by the network device. This is not limited in this application. When the preset duration is agreed on in a protocol, the preset duration may be determined based on at least one of the first frequency band, the first subcarrier spacing, and the first capability. When the preset duration is configured by the network device, the network device may determine the preset duration based on at least one of the first frequency band, the first subcarrier spacing, and the first capability.

In an implementation, the first uplink transmission and the second uplink transmission are two repeated transmissions, and the first uplink transmission and the second uplink transmission are scheduled by using one piece of scheduling information. In other words, the first uplink transmission and the second uplink transmission may be scheduled simultaneously by using uplink scheduling information. For example, the uplink scheduling information is DCI used for a scheduling PUSCH repeated transmission or a PUCCH repeated transmission, and the first uplink transmission and the second uplink transmission are two consecutive PUSCH repeated transmissions or PUCCH repeated transmissions.

In an implementation, the uplink scheduling information is DCI for scheduling a transmission of a plurality of PUSCHs, and both the first uplink transmission and the second uplink transmission are used for the transmission of the PUSCHs.

In an implementation, the first uplink transmission and the second uplink transmission are respectively scheduled by using different scheduling information. For example, the uplink scheduling information includes first DCI and second DCI, the first DCI is used for scheduling the first uplink transmission, and the second DCI is used for scheduling the second uplink transmission.

In an implementation, the first uplink transmission and the second uplink transmission are respectively located in different slots. For example, the first uplink transmission is located in a first slot, and the second uplink transmission is located in a second slot.

In an implementation, the first uplink transmission and the second uplink transmission are located in a same slot.

In an implementation, the preset duration between the first uplink transmission and the second uplink transmission is greater than or equal to an absolute value of a difference between the second timing advance and the first timing advance.

With reference to the foregoing descriptions, the following provides descriptions based on different application scenarios.

Implementation 1: If Implementation 1 is applied to a scenario of inter-slot scheduling, the uplink scheduling information includes first DCI and second DCI. The first DCI is used for scheduling the terminal device to perform the first uplink transmission in the first slot, the second DCI is used for scheduling the terminal device to perform the second uplink transmission in the second slot, the first slot is adjacent to the second slot, and the first slot is before the second slot.

In this implementation, the preset duration between a last symbol used for the first uplink transmission in the first slot and a 1st symbol used for the second uplink transmission in the second slot is duration corresponding to the at least one symbol.

In this implementation, the first slot and the second slot satisfy one or more of the following:

if the last symbol in the first slot is used for the first uplink transmission, a start symbol used for the second uplink transmission in the second slot is at least an $n^{th}$ symbol in the second slot, where n is an integer greater than 1;

if the 1st symbol in the second slot is used for the second uplink transmission, there is an interval of at least k symbols between the last symbol used for the first uplink transmission in the first slot and the 1st symbol in the second slot, where k is an integer greater than 0;

there is an interval of p symbols between the last symbol used for the first uplink transmission in the first slot and the 1st symbol in the second slot, where p is an integer greater than 0;

there is an interval of q symbols between the 1st symbol used for the second uplink transmission in the second slot and the last symbol in the first slot, where q is an integer greater than 0; or

there is an interval of m symbols between the last symbol used for the first uplink transmission in the first slot and the 1st symbol used for the second uplink transmission in the second slot, where m is an integer greater than 0. Specific values of n, k, p, q, and m may be determined based on an actual situation, or may be specific values specified in a protocol, or may be configured by the network device. For example, when the first frequency band is located in the FR1, the first subcarrier spacing is 60 kHz, and the first capability indicates that the terminal device supports the case in which the difference between the two downlink timing references is greater than the length of the cyclic prefix, the values of n, k, p, q, and m are 2. When the first capability indicates that the terminal device does not support the case in which the difference between the two downlink timing references is greater than the length of the cyclic prefix, the values of n, k, p, q, and m are 1. When the first frequency band is not located in the FR1 and/or the first subcarrier spacing is not 60 kHz, and the first capability indicates that the terminal device supports the case in which the difference between the two downlink timing references is greater than the length of the cyclic prefix, the values of n, k, p, q, and m are 1. When the first subcarrier spacing is 15 kHz, 30 kHz, or 120 kHz, the preset duration may be equal to a length of one symbol, in other words, n, k, p, q, and m are 1. When the first frequency band is the FR2, the preset duration may be equal to a length of one symbol, in other words, n, k, p, q, and m are 1. When the first capability indicates that the terminal device supports the case in which the difference between the two downlink timing references is greater than the length of the cyclic prefix, the preset duration may be equal to a length of two symbols, in other words, n, k, p, q, and m are 1. For example,

$n \geq \lceil |TA1 - TA2| \rceil / Lo$, where TA1 represents the first timing advance, TA2 represents the second timing advance, Lo represents duration corresponding to one symbol, and $\lceil \ \rceil$ represents a rounding-up operation. For example, the protocol specifies that m is 1, representing that there is an interval of at least a length of one symbol between two uplink transmissions.

Implementation 2: If Implementation 2 is applied to a scenario of intra-slot scheduling, the uplink scheduling information is used for scheduling the terminal device to perform the first uplink transmission and the second uplink transmission in one slot, and the preset duration between the first uplink transmission and the second uplink transmission is duration corresponding to the at least one symbol. For example, the uplink scheduling information includes first DCI and second DCI, the first DCI is used for scheduling the terminal device to perform the first uplink transmission, the second DCI is used for scheduling the terminal device to perform the second uplink transmission, and the first uplink transmission and the second uplink transmission are located in a same slot. The preset duration may be a specific value specified in a protocol, for example, a length of one symbol.

For example, when the first frequency band is located in the FR1, the first subcarrier spacing is 60 kHz, and the first capability indicates that the terminal device supports the case in which the difference between the two downlink timing references is greater than the length of the cyclic prefix, the preset duration is a length of two symbols. When the first capability indicates that the terminal device does not support the case in which the difference between the two downlink timing references is greater than the length of the cyclic prefix, the preset duration is a length of one symbol. When the first frequency band is not located in the FR1 and/or the first subcarrier spacing is not 60 kHz, and the first capability indicates that the terminal device supports the case in which the difference between the two downlink timing references is greater than the length of the cyclic prefix, the preset duration is a length of one symbol. When the first subcarrier spacing is 15 kHz, 30 kHz, or 120 kHz, the preset duration may be equal to a length of one symbol. When the first frequency band is the FR2, the preset duration may be equal to a length of one symbol. When the first capability indicates that the terminal device supports the case in which the difference between the two downlink timing references is greater than the length of the cyclic prefix, the preset duration may be equal to a length of two symbols.

Implementation 3: If Implementation 3 is applied to a scenario in which a plurality of PUSCHs are scheduled by using a single piece of DCI, the uplink scheduling information is used for scheduling the terminal device to perform a plurality of PUSCH transmissions, and the first uplink transmission and the second uplink transmission are two adjacent PUSCH transmissions in the plurality of PUSCH transmissions.

For example, when the first frequency band is located in the FR1, the first subcarrier spacing is 60 kHz, and the first capability indicates that the terminal device supports the case in which the difference between the two downlink timing references is greater than the length of the cyclic prefix, the preset duration between the first uplink transmission and the second uplink transmission is a length of two symbols. When the first capability indicates that the terminal device does not support the case in which the difference between the two downlink timing references is greater than the length of the cyclic prefix, the preset duration between the first uplink transmission and the second uplink transmission is a length of one symbol. When the first frequency band is not located in the FR1 and/or the first subcarrier spacing is not 60 kHz, and the first capability indicates that the terminal device supports the case in which the difference between the two downlink timing references is greater than the length of the cyclic prefix, the preset duration between the first uplink transmission and the second uplink transmission is a length of one symbol. When the first subcarrier spacing is 15 kHz, 30 kHz, or 120 kHz, the preset duration between the first uplink transmission and the second uplink transmission may be equal to a length of one symbol. When the first frequency band is the FR2, the preset duration may be equal to a length of one symbol. When the first capability indicates that the terminal device supports the case in which the difference between the two downlink timing references is greater than the length of the cyclic prefix, the preset duration between the first uplink transmission and the second uplink transmission may be equal to a length of two symbols.

In Implementation 1, Implementation 2, and Implementation 3, the first uplink transmission and the second uplink transmission may further satisfy at least one of the following conditions.

Condition 1: A first timing advance associated with the first uplink transmission is different from a second timing advance associated with the second uplink transmission.

Condition 2: The second timing advance is greater than the first timing advance.

Condition 3: A difference between the second timing advance and the first timing advance is greater than or equal to a length of one cyclic prefix.

Condition 4: A first difference between the second timing advance and the first timing advance is greater than a second difference between a downlink timing reference of the second uplink transmission and a downlink timing reference of the first uplink transmission.

Condition 5: The first difference is greater than a sum of the second difference and a length of one cyclic prefix. Condition 6: Start time of the second uplink transmission is less than end time of the first uplink transmission.

Condition 7: A third difference between the downlink timing reference of the second uplink transmission and the second timing advance is less than a sum of a fourth difference between the downlink timing reference of the first uplink transmission and the first timing advance and a time length of the first uplink transmission. The second difference between the downlink timing reference of the second uplink transmission and the downlink timing reference of the first uplink transmission may be understood as a difference in downlink receiving time corresponding to a same frame or a same slot. The second difference may be reported by the terminal device to the network device, or may be estimated by the network device. For example, the first uplink transmission and the second uplink transmission are two adjacent uplink transmissions between slots, the first timing advance is TA1, the second timing advance is TA2, and a length of one slot is Ls. It is assumed that, in a same slot, the downlink timing reference of the first uplink transmission is DL1, and the downlink timing reference of the second uplink transmission is DL2. In this case, an actual downlink receiving time reference point of the second uplink transmission is DL2+Ls, and a downlink receiving time reference point of the first uplink transmission is DL1. If DL2+Ls-TA2<DL1-TA1+Ls, in other words, if uplink sending start time of the second uplink transmission is before uplink sending end time of the first uplink transmission, the second uplink transmission and the first uplink transmission overlap. DL2+Ls-TA2<DL1-TA1+Ls may also be represented as DL2-DL1<TA2-TA1, in other words, the first difference is greater than the second difference.

For another example, the first uplink transmission and the second uplink transmission are two adjacent uplink transmissions in a slot. If DL2-TA2<DL1-TA1, in other words, if uplink sending start time of the second uplink transmission is before uplink sending end time of the first uplink transmission, the second uplink transmission and the first uplink transmission overlap. DL2-TA2<DL1-TA1 may be represented as DL2-DL1<TA2-TA1, in other words, the first difference is greater than the second difference.

For another example, the first uplink transmission and the second uplink transmission are two adjacent uplink transmissions in a slot, and a length of one cyclic prefix is Lcp. If (DL1-TA1)-(DL2-TA2)>Lcp, an overlapping part exceeds the length of the cyclic prefix. The foregoing formula may be represented as (DL1-DL2)-(TA1-TA2)>Lcp, in other words, the first difference is greater than a sum of the second difference and the length of the cyclic prefix.

Implementation 4: If Implementation 4 is applied to a scenario of an uplink TDM repeated transmission, the uplink scheduling information is used for scheduling the terminal device to perform a plurality of repeated transmissions. Each of the plurality of repeated transmissions corresponds to a different slot, each of the plurality of repeated transmissions is located in one slot, and the first uplink transmission and the second uplink transmission are two consecutive repeated transmissions in the plurality of repeated transmissions

For example, when the first frequency band is located in the FR1, the first subcarrier spacing is 60 kHz, and the first capability indicates that the terminal device supports the case in which the difference between the two downlink timing references is greater than the length of the cyclic prefix, the preset duration between the first uplink transmission and the second uplink transmission is a length of two symbols. When the first capability indicates that the terminal device does not support the case in which the difference between the two downlink timing references is greater than the length of the cyclic prefix, the preset duration between the first uplink transmission and the second uplink transmission is a length of one symbol. When the first frequency band is not located in the FR1 and/or the first subcarrier spacing is not 60 kHz, and the first capability indicates that the terminal device supports the case in which the difference between the two downlink timing references is greater than the length of the cyclic prefix, the preset duration between the first uplink transmission and the second uplink transmission is a length of one symbol. When the first capability indicates that the terminal device supports the case in which the difference between the two downlink timing references is greater than the length of the cyclic prefix, the preset duration between the first uplink transmission and the second uplink transmission may be equal to a length of two symbols. When the first subcarrier spacing is 15 kHz, 30 kHz, or 120 kHz, the preset duration between the first uplink transmission and the second uplink transmission may be equal to a length of one symbol. When the first frequency band is the FR2, the preset duration may be equal to a length of one symbol. When the first capability indicates that the terminal device supports the case in which the difference between the two downlink timing references is greater than the length of the cyclic prefix, the preset duration between the first uplink transmission and the second uplink transmission may be equal to a length of two symbols.

In this implementation, each repeated transmission satisfies one or more of the following:

a symbol length L of each repeated transmission does not exceed N, and N is less than or equal to a maximum quantity Nmax of symbols included in one slot;

preset duration of an interval between two consecutive repeated transmissions in a plurality of repeated transmissions is duration corresponding to Nmax-L symbols, a quantity L of symbols used for a repeated transmission in one slot is less than M, and M is less than or equal to a maximum quantity Nmax of symbols included in one slot;

there is an interval of w symbols between a last symbol occupied by each of a plurality of repeated transmissions in a slot and a start symbol of a next slot of the slot, in other words, the last w symbols in the slot in which each repeated transmission is located cannot be used for an uplink transmission, and w is an integer greater than or equal to 0;

there is an interval of x symbols between a 1st symbol occupied by each of a plurality of repeated transmissions in a slot and an end symbol of a previous slot of the slot, in other words, the first x symbols in the slot in which each repeated transmission is located cannot be used for an uplink transmission, and x is an integer greater than or equal to 0; and the method is applicable to a repeated transmission in a mapping type B (mapping type B) manner; or

there is an interval of a symbols between a 1st symbol occupied by each of a plurality of repeated transmissions in a slot and an end symbol of a previous slot of the slot, and there is an interval of b symbols between a last symbol occupied by each of the plurality of repeated transmissions in the slot and a start symbol of a next slot of the slot, in other words, the first a symbols and the last b symbols of the slot in which each repeated transmission is located cannot be used for an uplink transmission, and a and b are integers greater than or equal to 0; and the method is applicable to a repeated transmission in a mapping type B manner.

For example, when the first frequency band is located in the FR1, the first subcarrier spacing is 60 kHz, and the first capability indicates that the terminal device supports the case in which the difference between the two downlink timing references is greater than the length of the cyclic prefix, the preset duration between the first uplink transmission and the second uplink transmission is a length of two symbols, in other words, L does not exceed Nmax-2 (or N and M are Nmax-2), and w, x, and a+b are 2.

For example, when the first capability indicates that the terminal device does not support the case in which the difference between the two downlink timing references is greater than the length of the cyclic prefix, the preset duration between the first uplink transmission and the second uplink transmission is a length of one symbol, in other words, L does not exceed Nmax-1 (or N and M are Nmax-1), and w, x, and a+b are 1.

For example, when the first frequency band is not located in the FR1 and/or the first subcarrier spacing is not 60 kHz, and the first capability indicates that the terminal device supports the case in which the difference between the two downlink timing references is greater than the length of the cyclic prefix, the preset duration between the first uplink transmission and the second uplink transmission is a length of one symbol, in other words, L does not exceed Nmax-1 (or N and M are Nmax-1), and w, x, and a+b are 1.

For example, when the first capability indicates that the terminal device supports the case in which the difference between the two downlink timing references is greater than the length of the cyclic prefix, the preset duration between the first uplink transmission and the second uplink transmission may be equal to a length of two symbols, in other words, L does not exceed Nmax-2 (or N and M are Nmax-2), and w, x, and a+b are 2.

When the first subcarrier spacing is 15 kHz, 30 kHz, or 120 kHz, the preset duration between the first uplink transmission and the second uplink transmission may be equal to a length of one symbol, in other words, L does not exceed Nmax-1 (or N and M are Nmax-1), and w, x, and a+b are 1.

For example, when the first frequency band is the FR2, the preset duration may be equal to a length of one symbol, in other words, L does not exceed Nmax-1 (or N and M are Nmax-1), and w, x, and a+b are 1.

For example, when the first capability indicates that the terminal device supports the case in which the difference between the two downlink timing references is greater than the length of the cyclic prefix, the preset duration between the first uplink transmission and the second uplink transmission may be equal to a length of two symbols, in other words, L does not exceed Nmax-2 (or N and M are Nmax-2), and w, x, and a+b are 2.

For example, if the implementation is applied to a PUSCH inter-slot repeated transmission or a PUCCH inter-slot repeated transmission, the first uplink transmission and the second uplink transmission are two adjacent PUSCH/PUCCH repeated transmissions. In the PUSCH/PUCCH inter-slot repeated transmission, there are two mapping rules in time domain. One is a mapping type A (mapping type A), to be specific, a start symbol of each uplink transmission is a start symbol of a slot, that is, S=0, and a symbol length L occupied by the uplink transmission is {4, ..., and Nmax}. The other is a mapping type B (mapping type B), to be specific, a start symbol S of each uplink transmission is one of {0, ..., and Nmax-1}, and a symbol length L occupied by the uplink transmission is {1, ..., and Nmax}. Because each inter-slot repeated transmission is located at a same time domain location in each slot, even if each repeated transmission occupies several slots, the repeated transmission occupies the same time domain location in each slot. To avoid that two repeated transmissions overlap in time domain, preset duration is reserved between slots. As shown in FIG. 10, if the preset duration is Gmin, for the mapping type A, L needs to be less than (Nmax-Gmin); for the mapping type B, if an end location of a previous slot is S+L, and a start location of a next slot is S, an interval between slots is (Nmax-(S+L))+S=Nmax-L, and Nmax-L needs to be greater than Gmin. For the two cases, L is less than (Nmax-Gmin), where a value range of Gmin is {0, ..., and Nmax}. Therefore, a value range of Nmax-Gmin is {0, ..., and Nmax}.

In Implementation 4, if a quantity of repeated transmissions scheduled by using the uplink scheduling information is X, where X is an integer greater than 1, the X repeated transmissions include the first uplink transmission and the second uplink transmission, and the X repeated transmissions, the first uplink transmission, and the second uplink transmission may further satisfy at least one of the following conditions.

Condition 1: When X is greater than 2, the X repeated transmissions are associated with a first timing advance and a second timing advance in a cyclic mapping manner, and the first timing advance is different from the second timing advance. For example, an $i^{th}$ repeated transmission is associated with the first timing advance, an $(i+1)^{th}$ repeated transmission is associated with the second timing advance, and a value of i is 0, 1, 2, 3, .... For example, assuming that the quantity of repetitions is 8, a $1^{st}$ repeated transmission, a $3^{rd}$ repeated transmission, a $5^{th}$ repeated transmission, and a $7^{th}$ repeated transmission are associated with the first timing advance, and a $2^{nd}$ repeated transmission, a $4^{th}$ repeated transmission, a $6^{th}$ repeated transmission, and an $8^{th}$ repeated transmission are associated with the second timing advance.

Condition 2: When X is equal to 2, the X repeated transmissions are associated with a first timing advance and a second timing advance, the second timing advance is greater than the first timing advance, a $1^{st}$ repeated transmission in the X repeated transmissions is associated with the first timing advance, and a $2^{nd}$ repeated transmission in the X repeated transmissions is associated with the second timing advance.

Condition 3: When X is equal to 2, the X repeated transmissions are associated with a first timing advance and a second timing advance, a difference between the second timing advance and the first timing advance is greater than a length of one cyclic prefix, a $1^{st}$ repeated transmission in the X repeated transmissions is associated with the first timing advance, and a $2^{nd}$ repeated transmission in the X repeated transmissions is associated with the second timing advance.

Condition 4: When X is greater than 4, the X repeated transmissions are associated with a first timing advance and a second timing advance in a sequential mapping manner, and the first timing advance is different from the second timing advance. For example, an $i^{th}$ repeated transmission to an $(i+y)^{th}$ repeated transmission are associated with the first timing advance, and an $(i+y+1)^{th}$ repeated transmission to an $(i+2y+1)^{th}$ repeated transmission are associated with the second timing advance. A value of y is a preset value, for example, y=2, and a value of i is 0, 1, 2, 3, .... For example, assuming that the quantity of repetitions is 8, and y=1, a $1^{st}$ repeated transmission and a $2^{nd}$ repeated transmission are associated with the first timing advance, a $3^{rd}$ repeated transmission and a $4^{th}$ repeated transmission are associated with the second timing advance, a $5^{th}$ repeated transmission and a $6^{th}$ repeated transmission are associated with the first timing advance, and a $7^{th}$ repeated transmission and an $8^{th}$ repeated transmission are associated with the second timing advance.

Condition 5: When X is less than or equal to 4, the X repeated transmissions are associated with a first timing advance and a second timing advance in a sequential mapping manner, and the second timing advance is greater than the first timing advance. The first timing advance is used for first $\lceil X/2 \rceil$ repeated transmissions in the X repeated transmissions, and the second timing advance is used for last $\lfloor X/2 \rfloor$ repeated transmissions in the X repeated transmissions. In other words, the first $\lceil X/2 \rceil$ repeated transmissions in the X repeated transmissions are associated with the first timing advance, and the last $\lfloor X/2 \rfloor$ repeated transmissions in the X repeated transmissions are associated with the second timing advance. Alternatively, the first timing advance is used for first $\lfloor X/2 \rfloor$ repeated transmissions in the X repeated transmissions, and the second timing advance is used for last $\lceil X/2 \rceil$ repeated transmissions in the X repeated transmissions. In other words, the first $\lfloor X/2 \rfloor$ repeated transmissions in the X repeated transmissions are associated with the first timing advance, and the last $\lceil X/2 \rceil$ repeated transmissions in the X repeated transmissions are associated with the second timing advance. ⌈ ⌉ represents rounding up, and ⌊ ⌋ represents rounding down. For example, when X=3, a 1st repeated transmission is associated with the first timing advance, and a 2nd repeated transmission and a 3rd repeated transmission are associated with the second timing advance; or a first repeated transmission and a second repeated transmission are associated with the first timing advance, and a 3rd repeated transmission is associated with the second timing advance.

Condition 6: When X is less than or equal to 4, the X repeated transmissions are associated with a first timing advance and a second timing advance in a sequential mapping manner, a difference between the second timing advance and the first timing advance is greater than a length of one cyclic prefix, the first timing advance is used for first $\lceil X/2 \rceil$ repeated transmissions in the X repeated transmissions, and the second timing advance is used for last $\lfloor X/2 \rfloor$ repeated transmissions in the X repeated transmissions.

Condition 7: The first uplink transmission and the second uplink transmission are respectively associated with different timing advances.

Condition 8: Timing advances associated with two adjacent repeated transmissions in the X repeated transmissions are different.

Condition 9: The first uplink transmission is located in a first slot, the second uplink transmission is located in a second slot, the first slot is adjacent to the second slot, the first slot is before the second slot, and a timing advance associated with the first uplink transmission is less than a timing advance associated with the second uplink transmission.

Condition 10: The first uplink transmission is performed before the second uplink transmission, and a sum of a timing advance associated with the first uplink transmission and a length of one cyclic prefix is less than a timing advance associated with the second uplink transmission.

Condition 11: The first uplink transmission is performed before the second uplink transmission, and a difference between a downlink timing reference of the second uplink transmission and a downlink timing reference of the first uplink transmission is less than a difference between a timing advance associated with the second uplink transmission and a timing advance associated with the first uplink transmission. The difference between the downlink timing reference of the second uplink transmission and the downlink timing reference of the first uplink transmission may be reported by the terminal device to the network device, or may be determined by the network device.

Condition 12: The first uplink transmission is performed before the second uplink transmission, and a sum of a difference between a downlink timing reference of the second uplink transmission and a downlink timing reference of the first uplink transmission and a length of one cyclic prefix is less than a difference between a timing advance associated with the second uplink transmission and a timing advance associated with the first uplink transmission.

Implementation 5: If Implementation 5 is applied to a scenario of an uplink intra-slot repeated transmission, the uplink scheduling information is used for scheduling the terminal device to perform a plurality of repeated transmissions in one slot, the first uplink transmission and the second uplink transmission are two consecutive repeated transmissions in the plurality of repeated transmissions, and the preset duration between the first uplink transmission and the second uplink transmission is duration corresponding to at least one symbol. For example, if the implementation is applied to a PUSCH repetition type B (PUSCH repetition type B) and a PUCCH sub-slot repeated transmission (PUCCH sub-slot repetition), the uplink scheduling information is used for scheduling the terminal device to perform a plurality of PUSCH or PUCCH repeated transmissions in one slot.

For example, when the first frequency band is located in the FR1, the first subcarrier spacing is 60 kHz, and the first capability indicates that the terminal device supports the case in which the difference between the two downlink timing references is greater than the length of the cyclic prefix, the preset duration between the first uplink transmission and the second uplink transmission is a length of two symbols. When the first capability indicates that the terminal device does not support the case in which the difference between the two downlink timing references is greater than the length of the cyclic prefix, the preset duration between the first uplink transmission and the second uplink transmission is a length of one symbol. When the first frequency band is not located in the FR1 and/or the first subcarrier spacing is not 60 kHz, and the first capability indicates that the terminal device supports the case in which the difference between the two downlink timing references is greater than the length of the cyclic prefix, the preset duration between the first uplink transmission and the second uplink transmission is a length of one symbol. When the first capability indicates that the terminal device supports the case in which the difference between the two downlink timing references is greater than the length of the cyclic prefix, the preset duration between the first uplink transmission and the second uplink transmission may be equal to a length of two symbols. When the first subcarrier spacing is 15 kHz, 30 kHz, or 120 kHz, the preset duration between the first uplink transmission and the second uplink transmission may be equal to a length of one symbol. When the first frequency band is the FR2, the preset duration may be equal to a length of one symbol. When the first capability indicates that the terminal device supports the case in which the difference between the two downlink timing references is greater than the length of the cyclic prefix, the preset duration between the first uplink transmission and the second uplink transmission may be equal to a length of two symbols.

In Implementation 5, if a quantity of repeated transmissions scheduled by using the uplink scheduling information is X, the X repeated transmissions include the first uplink transmission and the second uplink transmission, and the X repeated transmissions, the first uplink transmission, and the second uplink transmission may further satisfy at least one of the following conditions.

Condition 1: The X repeated transmissions are associated with a first timing advance and a second timing advance in a cyclic mapping manner, the first timing advance is different from the second timing advance, and X is greater than 2.

Condition 2: The X repeated transmissions are associated with a first timing advance and a second timing advance, X is equal to 2, the second timing advance is greater than the first timing advance, a 1st repeated transmission in the X repeated transmissions is associated with the first timing advance, and a 2nd repeated transmission in the X repeated transmissions is associated with the second timing advance.

Condition 3: The X repeated transmissions are associated with a first timing advance and a second timing advance, X is equal to 2, a difference between the second timing advance and the first timing advance is greater than a length of one cyclic prefix, a 1st repeated transmission in the X repeated transmissions is associated with the first timing advance, and a 2nd repeated transmission in the X repeated transmissions is associated with the second timing advance.

Condition 4: Timing advances associated with two adjacent repeated transmissions in the X repeated transmissions are different.

Condition 5: The first uplink transmission is performed before the second uplink transmission, and a timing advance associated with the first uplink transmission is less than a timing advance associated with the second uplink transmission.

Condition 6: The first uplink transmission is performed before the second uplink transmission, and a sum of a timing advance associated with the first uplink transmission and a length of one cyclic prefix is less than a timing advance associated with the second uplink transmission.

Condition 7: The first uplink transmission is performed before the second uplink transmission, and a difference between a downlink timing reference of the second uplink transmission and a downlink timing reference of the first uplink transmission is less than a difference between a timing advance associated with the second uplink transmission and a timing advance associated with the first uplink transmission. The difference between the downlink timing reference of the second uplink transmission and the downlink timing reference of the first uplink transmission may be reported by the terminal device to the network device, or may be determined by the network device.

Condition 8: The first uplink transmission is performed before the second uplink transmission, and a sum of a difference between a downlink timing reference of the second uplink transmission and a downlink timing reference of the first uplink transmission and a length of a cyclic prefix is less than a difference between a timing advance associated with the second uplink transmission and a timing advance associated with the first uplink transmission.

S902: The network device sends the uplink scheduling information to the terminal device. Correspondingly, the terminal device receives the uplink scheduling information from the network device.

In an implementation, the terminal device satisfies at least one of the following conditions:

    not supporting an avoidance method, where for specific content of the avoidance method, refer to the descriptions in S802, and details are not described herein again;
    not supporting performing a plurality of uplink transmissions simultaneously;
    when the first timing advance associated with the first uplink transmission is different from the second timing advance associated with the second uplink transmission, not supporting performing the first uplink transmission and the second uplink transmission simultaneously;
    not supporting performing uplink transmissions simultaneously by using a beam or a resource associated with a first uplink transmission and a beam or a resource associated with a second uplink transmission; or
    not supporting a rollback from a multi-timing advance mode to a single-timing advance mode.

For specific content of each condition, refer to the descriptions in S801. Details are not described herein again.

How the network device determines whether the terminal device satisfies the foregoing conditions is not limited in this application. For example, the terminal device may send the capability information to the network device (for details, refer to the descriptions in S801), and the network device determines the capability of the terminal device based on the capability information.

S903: The terminal device performs the first uplink transmission and the second uplink transmission based on the uplink scheduling information.

A specific process in which the terminal device performs the uplink transmission is not limited in this application, and details are not described herein again.

According to the foregoing method, when there is an interval between two adjacent uplink transmissions that the network device schedules the terminal device to perform, it is avoided that the first uplink transmission and the second uplink transmission overlap in time domain, thereby improving data transmission efficiency.

The processes shown in FIG. 8 and FIG. 9 may be implemented separately or jointly. This is not limited in this application.

Currently, in a random access process, after being powered on, the terminal device performs cell search, and obtains downlink time synchronization by using a primary synchronization signal and a secondary synchronization signal that are broadcast in a cell, so that a downlink frame of the terminal device is aligned with a received frame sent by the network device. Then, the terminal device sends a physical random access channel (physical random access channel, PRACH) preamble (preamble). The network device determines an uplink timing advance, and then sends the uplink timing advance to the terminal device by using a TAC field of a random access response (random access response, RAR). The terminal device determines uplink sending timing based on the TAC field. A timing advance command (timing advance command, TAC) field carried in the RAR is an initial value TA of the timing advance, where the initial value is 0 to 3846, and a length is 12 bits. An actual value converted into is $N_{TA}=TA*16*64/2^{\mu}$ (in a unit of Tc), where $\mu$ is related to a subcarrier spacing. When the terminal device is out of synchronization in uplink timing, the terminal device also obtains the TA initial value by using this process.

Random access is a process of establishing a radio link between a terminal device and a network device. After random access is completed, data exchange may be performed between the terminal device and the network device. Random access includes contention based random access (contention based random access, CBRA) and contention free random access (contention free random access, CFRA).

A contention based random access process includes the following steps: A terminal device sends a message (message, Msg) 1 to a network device, where the Msg 1 includes a random access preamble; the network device sends a Msg 2 to the terminal device, where the Msg 2 includes a temporary cell-radio network temporary identifier (cell-radio network temporary identifier, C-RNTI) allocated to the terminal device; the terminal device sends a Msg 3 to the network device, where the Msg 3 includes a temporary C-RNTI; and the network device sends a Msg 4 to the terminal device, where the Msg 4 includes a C-RNTI allocated to the terminal device that succeeds in accessing. In this case, it may be considered that the terminal device completes random access.

A contention free random access process includes the following steps: A terminal device sends a Msg 1 to a network device, and the network device sends a Msg 4 to the terminal device. The contention free random access process does not require the Msg2 or Msg3. In the contention free random access, a preamble sequence is allocated by the network device. For example, the network device sends the preamble sequence to the terminal device by using RRC signaling or PDCCH signaling.

A random access channel occasion (random access channel occasion, RO) includes time domain, frequency domain, and code domain resources. The time domain resource and the frequency domain resource are time-frequency resource locations at which the terminal device should send a random access request, and the code domain resource is a preamble sequence for the terminal device to send a random access request. For the contention free random access, the preamble sequence is directly indicated by the network device by using signaling.

Multi-TA enhancement is introduced in a multi-DCI M-TRP scenario. Currently, only one TA initial value can be obtained. When the terminal device is out of synchronization in uplink or just accesses the network device, the terminal device obtains the initial TA according to the foregoing descriptions. When the terminal device is not out of synchronization, the terminal device ignores the TAC in the received RAR. How to obtain an initial value of a second TA by using the random access process is a main problem to be resolved in this embodiment.

Step 1: The network device sends a configuration parameter to the terminal device. Correspondingly, the terminal device receives the configuration parameter from the network device.

The configuration parameter sent by the network device includes at least one of the following:

parameter 1, indicating whether control information includes a TA index or a timing advance group (timing advance group, TAG) index, where the control information may be DCI 1_0;
parameter 2, used for synchronization signal and broadcast channel block (synchronization signal and PBCH block, SSB) grouping, where each SSB is associated with one TA/TAG, and the PBCH is a physical broadcast channel (physical broadcast channel); or
parameter 3, used for pilot grouping, where each pilot group is associated with one TA/TAG.

Step 2: The network device sends the control information to the terminal device.

The control information is scrambled by using a C-RNTI, and a "Frequency domain resource assignment" field in the control information is all 1s, and the control information further includes a random access pilot index, and may further include one or more of the following fields.

- The TA index or the TAG index indicates a TA to which an initial TA value obtained in the random access process belongs.
- When no supplementary Uplink is configured in ServingCellConfig, a "UL/SUL indicator" field indicates whether an initial TA obtained in the random process is the second TA.
- When the random access pilot index is not all 0s, an SSB index and a PRACH mask index are further included.

  - A specific 1-bit (bit) field indicates whether the control information is used for triggering a random access process of a serving cell to obtain a TA initial value of the serving cell, or is used for triggering a random access process of an activated neighboring cell to obtain a TA initial value of the activated neighboring cell. For example, when the field is 0, the TA value obtained in the random access process is the TA value of the serving cell; or when the field is 1, the TA value obtained in the random access process is the TA value of the activated neighboring cell.

The control information is used for triggering the terminal device to initiate a random access process to obtain the TA initial value.

When the random access pilot index is not all 0s, the terminal device is triggered to initiate a contention free random access process.

When the random access pilot index is all 0s, the terminal device is triggered to initiate a contention random access process.

Step 3: The terminal device sends a PRACH.

The terminal device monitors a physical downlink control channel (physical downlink control channel, PDCCH), and decodes the control information.

If the random access pilot index in the control information is not all 0s, the terminal device determines a beam direction and an RO based on the SSB index and the PRACH mask index in the control information, and then determines, based on the TA index or the TAG index and/or the "UL/SUL indicator" field, which TA value the initial TA value obtained in the random process is, or determines, based on the specific 1-bit field, whether the initial TA value obtained in the random process is the TA value of the activated neighboring cell. SUL represents supplementary uplink (supplementary uplink).

If the random access pilot index in the control information is all 0s, the terminal device may determine an associated SSB group and a pilot group based on the TA index or the TAG index and/or the "UL/SUL indicator" field, select a pilot sequence from the SSB group/pilot group, determine a beam direction, and select an RO associated with an SSB.

Step 4: The network device sends a random access response.

The network device receives the PRACH sent by the terminal device, calculates the initial TA value, and sends an RAR to the terminal device, where the RAR carries the initial TA value.

Step 5: The terminal device obtains the initial TA value.

The terminal device receives the RAR, and obtains the TA initial value.

When the terminal device currently maintains only one TA value, and a TA index or a TAG index corresponding to the TA value is different from the TA index or the TAG index in the control information, and/or the "UL/SUL indicator" field indicates the second TA, or the specific 1-bit field indicates that the initial TA value obtained in the random process is the TA value of the activated neighboring cell, the terminal device maintains two TAs.

When the terminal device currently maintains one TA value, and a TA index or a TAG index corresponding to the TA value is the same as the TA index or the TAG index in the control information, and/or the "UL/SUL indicator" field indicates a first TA, or the specific 1-bit field indicates that the initial TA value obtained in a random process is the TA value of the serving cell, the terminal device uses a new TA value in the RAR to overwrite an original TA value, and the terminal device still maintains one TA value.

When the terminal device currently maintains two TA values, the terminal device updates a corresponding TA value based on the TA index or the TAG index in the control information, or initializes the TA value of the serving cell or the activated neighboring cell based on the specific 1-bit field.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

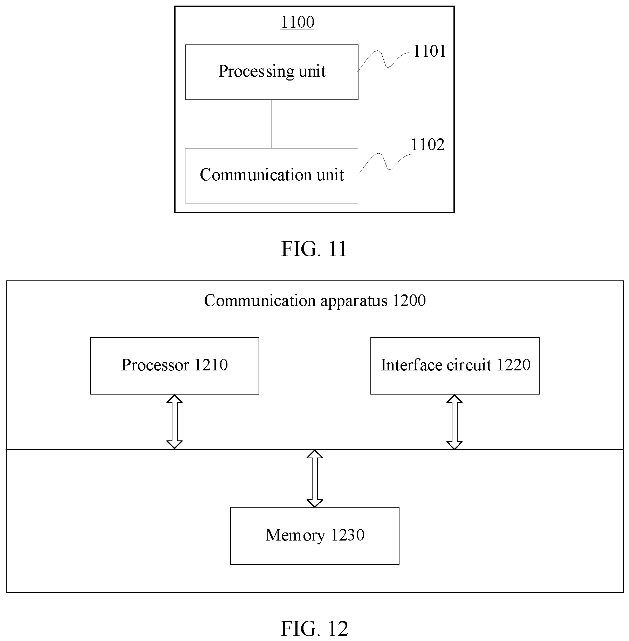

Same as the foregoing concept, as shown in FIG. 11, an embodiment of this application further provides a communication apparatus, configured to implement a function of the network device or the terminal device in the foregoing method. For example, the apparatus may be a software module or a chip system. In this embodiment of this application, the chip system may include a chip, or may include a chip and another discrete component. The communication apparatus 1100 may include a processing unit 1101 and a communication unit 1102.

In this embodiment of this application, the communication unit may also be referred to as a transceiver unit, and may include a sending unit and/or a receiving unit, which are respectively configured to perform sending and receiving steps of the network device or the terminal device in the foregoing method embodiments.

The following describes a communication apparatus provided in embodiments of this application in detail with reference to FIG. 11 and FIG. 12. It should be understood that descriptions of apparatus embodiments correspond to the descriptions of the method embodiments. Therefore, for content that is not described in detail, refer to the method embodiments. For brevity, details are not described herein again.

The communication unit may also be referred to as an interface circuit, a transceiver machine, a transceiver apparatus, or the like. The processing unit may also be referred to as a processor, a processing board, a processing module, a processing apparatus, or the like. Optionally, a component configured to implement a receiving function in the communication unit 1102 may be considered as a receiving unit, and a component configured to implement a sending function in the communication unit 1102 may be considered as a sending unit. In other words, the communication unit 1102 includes a receiving unit and a sending unit. The communication unit sometimes may also be referred to as a transceiver machine, an interface circuit, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus implements the function of the network device,

the processing unit is configured to determine uplink scheduling information, where the uplink scheduling information is used for scheduling a terminal device to perform a first uplink transmission and a second uplink transmission, the first uplink transmission and the second uplink transmission are two consecutive uplink transmissions, and there is an interval of preset duration between the first uplink transmission and the second uplink transmission; and

the communication unit is configured to send the uplink scheduling information to the terminal device.

When the communication apparatus implements the function of the terminal device,

the communication unit is configured to receive uplink scheduling information from a network device, where the uplink scheduling information is used for scheduling the terminal device to perform a first uplink transmission and a second uplink transmission, the first uplink transmission and the second uplink transmission are two consecutive uplink transmissions, and there is an interval of preset duration between the first uplink transmission and the second uplink transmission; and

the processing unit is configured to perform the first uplink transmission and the second uplink transmission based on the uplink scheduling information through the communication unit.

When the communication apparatus implements the function of the network device,

the processing unit is configured to determine indication information, where the indication information indicates, when an adjacent first uplink transmission and second uplink transmission are respectively associated with different timing advances, a terminal device to perform an uplink transmission in one or more of the following manners: delaying a transmission of data in the second uplink transmission by first duration, where the first duration is greater than or equal to second duration, and the second duration is duration of an overlapping area between the first uplink transmission and the second uplink transmission in time domain;

advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, where a sum of the third duration and the fourth duration is greater than or equal to second duration; or performing a data transmission in the first uplink transmission and the second uplink transmission based on a preset timing advance; and the communication unit is configured to send the indication information to the terminal device.

When the communication apparatus implements the function of the terminal device,

the communication unit is configured to receive indication information from a network device, where the indication information indicates, when an adjacent first uplink transmission and second uplink transmission are respectively associated with different timing advances, the terminal device to perform an uplink transmission in one or more of the following manners: delaying a transmission of data in the second uplink transmission by first duration, where the first duration is greater than or equal to second duration, and the second duration is duration of an overlapping area between the first uplink transmission and the second uplink transmission in time domain;

advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, where a sum of the third duration and the fourth duration is greater than or equal to second duration; or performing a data transmission in the first uplink transmission and the second uplink transmission based on a preset timing advance; and

the processing unit is configured to perform an uplink transmission based on the indication information.

The foregoing is merely an example. The processing unit 1101 and the communication unit 1102 may further perform other functions. For more detailed descriptions, refer to related descriptions in the embodiment shown in any one of FIG. 8 and FIG. 9. Details are not described herein again.

FIG. 12 is a diagram of a communication apparatus according to an embodiment of this application. The apparatus shown in FIG. 12 may be an implementation of a hardware circuit of the apparatus shown in FIG. 11. The communication apparatus is applicable to the foregoing flowcharts, and performs the functions of the terminal device or the network device in the foregoing method embodiments. For ease of descriptions, FIG. 12 shows only main components of the communication apparatus.

As shown in FIG. 12, the communication apparatus 1200 includes a processor 1210 and an interface circuit 1220. The processor 1210 and the interface circuit 1220 are coupled to each other. It may be understood that the interface circuit 1220 may be an interface circuit, a pin, an interface circuit, or an input/output interface. Optionally, the communication apparatus 1200 may further include a memory 1230, configured to: store instructions to be executed by the processor 1210, store input data required by the processor 1210 to run the instructions, or store data generated after the processor 1210 runs the instructions. The interface circuit may also be referred to as a transceiver machine, a transceiver, an input/output circuit, a transceiver circuit, or the like.

When the communication apparatus 1200 is configured to implement the method shown in any one of FIG. 8 and FIG. 9, the processor 1210 is configured to implement a function of the foregoing processing unit 1101, and the interface circuit 1220 is configured to implement a function of the foregoing communication unit 1102.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit, or may be another general-purpose processor, a digital signal processor, an application-specific integrated circuit or another programmable logic device, a transistor logic device, a hardware component, or any combination thereof. The general-purpose processor may be a microprocessor or any regular processor or the like.

The memory in embodiments of this application may be a random access memory, a flash memory, a read-only memory, a programmable read-only memory, an erasable programmable read-only memory, an electrically erasable programmable read-only memory, a register, a hard disk drive, a removable hard disk drive, or any other form of a storage medium well-known in the art.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An uplink scheduling method, comprising:

    determining, by a network device, uplink scheduling information, wherein the uplink scheduling information is used for scheduling a terminal device to perform a first uplink transmission and a second uplink transmission, a first timing advance associated with the first uplink transmission is different from a second timing advance associated with the second uplink transmission, the first uplink transmission and the second uplink transmission are two consecutive uplink transmissions, and there is an interval of preset duration between the first uplink transmission and the second uplink transmission; and
    sending, by the network device, the uplink scheduling information to the terminal device.

2. The method according to claim **1,** wherein the preset duration is determined based on at least one of the following:
   a frequency band used by the terminal device for an uplink transmission, a subcarrier spacing used by the terminal device for an uplink transmission, or a capability of the terminal device, wherein the capability of the terminal device indicates whether the terminal device supports a case in which a difference between two downlink timing references is greater than a length of a cyclic prefix.

3. The method according to claim 1 or 2, wherein the uplink scheduling information is used for scheduling the terminal device to perform the first uplink transmission in a first slot and perform the second uplink transmission in a second slot, the first slot is adjacent to the second slot, and the preset duration between a last symbol used for the first uplink transmission in the first slot and a $1^{st}$ symbol used for the second uplink transmission in the second slot is duration corresponding to at least one symbol.

4. The method according to claim 3, wherein the first slot is before the second slot, and the first slot and the second slot scheduled by using the uplink scheduling information satisfy one or more of the following:

    if the last symbol in the first slot is used for the first uplink transmission, a start symbol used for the second uplink transmission in the second slot is an $n^{th}$ symbol in the second slot, wherein n is an integer greater than 1;
    if the $1^{st}$ symbol in the second slot is used for the second uplink transmission, there is an interval of k symbols between the last symbol used for the first uplink transmission in the first slot and the $1^{st}$ symbol in the second slot, wherein k is an integer greater than 0;
    there is an interval of p symbols between the last symbol used for the first uplink transmission in the first slot and the $1^{st}$ symbol in the second slot, wherein p is an integer greater than 0;
    there is an interval of q symbols between the $1^{st}$ symbol used for the second uplink transmission in the second slot and the last symbol in the first slot, wherein q is an integer greater than 0; or

there is an interval of m symbols between the last symbol used for the first uplink transmission in the first slot and the 1st symbol used for the second uplink transmission in the second slot, wherein m is an integer greater than 0.

5. The method according to claim 1 or 2, wherein the uplink scheduling information is used for scheduling the terminal device to perform the first uplink transmission and the second uplink transmission in one slot, and the preset duration between the first uplink transmission and the second uplink transmission is duration corresponding to at least one symbol.

6. The method according to claim 1 or 2, wherein the uplink scheduling information is used for scheduling the terminal device to perform a plurality of repeated transmissions, each of the plurality of repeated transmissions corresponds to a different slot, each of the plurality of repeated transmissions is located in one slot, the first uplink transmission and the second uplink transmission are two consecutive repeated transmissions in the plurality of repeated transmissions, the preset duration between the first uplink transmission and the second uplink transmission is duration corresponding to Nmax-L symbols, and a quantity L of symbols used for the repeated transmission in one slot is less than or equal to a maximum quantity Nmax of symbols comprised in one slot.

7. The method according to claim 6, wherein there is an interval of w symbols between a last symbol occupied by each of the plurality of repeated transmissions in a slot and a start symbol of a next slot of the slot, wherein w is an integer greater than 0; or

there is an interval of x symbols between a 1st symbol occupied by each of the plurality of repeated transmissions in a slot and an end symbol of a previous slot of the slot, wherein x is an integer greater than 0; or
there is an interval of a symbols between a 1st symbol occupied by each of the plurality of repeated transmissions in a slot and an end symbol of a previous slot of the slot, and there is an interval of b symbols between a last symbol occupied by each of the plurality of repeated transmissions in the slot and a start symbol of a next slot of the slot, wherein a and b are integers greater than 0.

8. The method according to claim 1 or 2, wherein the uplink scheduling information is used for scheduling the terminal device to perform a plurality of repeated transmissions in one slot, the first uplink transmission and the second uplink transmission are two consecutive repeated transmissions in the plurality of repeated transmissions, and the preset duration between the first uplink transmission and the second uplink transmission is duration corresponding to at least one symbol.

9. The method according to any one of claims 6 to 8, wherein a quantity of repeated transmissions scheduled by using the uplink scheduling information is X, and the X repeated transmissions satisfy at least one of the following conditions:

when X is greater than 2, the X repeated transmissions are respectively associated with a first timing advance and a second timing advance in a cyclic mapping manner;
when X is equal to 2, the X repeated transmissions are associated with a first timing advance and a second timing advance, a 1st repeated transmission in the X repeated transmissions is associated with the first timing advance, and a 2nd repeated transmission in the X repeated transmissions is associated with the second timing advance, wherein the second timing advance is greater than the first timing advance, or a difference between the second timing advance and the first timing advance is greater than a length of one cyclic prefix;
when X is greater than 4, the X repeated transmissions are respectively associated with a first timing advance and a second timing advance in a sequential mapping manner;
when X is less than or equal to 4, the X repeated transmissions are associated with a first timing advance and a second timing advance in a sequential mapping manner, first $\lceil X/2 \rceil$ repeated transmissions in the X repeated transmissions are associated with the first timing advance, and last $\lfloor X/2 \rfloor$ repeated transmissions in the X repeated transmissions are associated with the second timing advance, wherein the second timing advance is greater than the first timing advance, or a difference between the second timing advance and the first timing advance is greater than a length of one cyclic prefix, $\lceil \rceil$ represents rounding up, and $\lfloor \rfloor$ represents rounding down; or
timing advances associated with two adjacent repeated transmissions in the X repeated transmissions are different.

10. The method according to any one of claims 1 to 9, wherein the first uplink transmission and the second uplink transmission satisfy at least one of the following conditions:

the second timing advance is greater than the first timing advance;
a difference between the second timing advance and the first timing advance is greater than or equal to a length of one cyclic prefix;

a first difference between the second timing advance and the first timing advance is greater than a second difference between a downlink timing reference of the second uplink transmission and a downlink timing reference of the first uplink transmission;

the first difference is greater than a sum of the second difference and a length of one cyclic prefix;

start time of the second uplink transmission is less than end time of the first uplink transmission; or

a third difference between the downlink timing reference of the second uplink transmission and the second timing advance is less than a sum of a fourth difference between the downlink timing reference of the first uplink transmission and the first timing advance and a time length of the first uplink transmission.

11. An uplink scheduling method, comprising:

receiving, by a terminal device, uplink scheduling information from a network device, wherein the uplink scheduling information is used for scheduling the terminal device to perform a first uplink transmission and a second uplink transmission, a first timing advance associated with the first uplink transmission is different from a second timing advance associated with the second uplink transmission, the first uplink transmission and the second uplink transmission are two consecutive uplink transmissions, and there is an interval of preset duration between the first uplink transmission and the second uplink transmission; and

performing, by the terminal device, the first uplink transmission and the second uplink transmission based on the uplink scheduling information.

12. The method according to claim 11, wherein the preset duration is determined based on at least one of the following:
a frequency band used by the terminal device for an uplink transmission, a subcarrier spacing used by the terminal device for an uplink transmission, or a capability of the terminal device, wherein the capability of the terminal device indicates whether the terminal device supports a case in which a difference between two downlink timing references is greater than a length of a cyclic prefix.

13. The method according to claim 11 or 12, wherein the uplink scheduling information is used for scheduling the terminal device to perform the first uplink transmission in a first slot and perform the second uplink transmission in a second slot, the first slot is adjacent to the second slot, and the preset duration between a last symbol used for the first uplink transmission in the first slot and a $1^{st}$ symbol used for the second uplink transmission in the second slot is duration corresponding to at least one symbol.

14. The method according to claim 13, wherein the first slot is before the second slot, and the first slot and the second slot scheduled by using the uplink scheduling information satisfy one or more of the following:

if the last symbol in the first slot is used for the first uplink transmission, a start symbol used for the second uplink transmission in the second slot is an $n^{th}$ symbol in the second slot, wherein n is an integer greater than 1;

if the $1^{st}$ symbol in the second slot is used for the second uplink transmission, there is an interval of k symbols between the last symbol used for the first uplink transmission in the first slot and the $1^{st}$ symbol in the second slot, wherein k is an integer greater than 0;

there is an interval of p symbols between the last symbol used for the first uplink transmission in the first slot and the $1^{st}$ symbol in the second slot, wherein p is an integer greater than 0;

there is an interval of q symbols between the $1^{st}$ symbol used for the second uplink transmission in the second slot and the last symbol in the first slot, wherein q is an integer greater than 0; or

there is an interval of m symbols between the last symbol used for the first uplink transmission in the first slot and the $1^{st}$ symbol used for the second uplink transmission in the second slot, wherein m is an integer greater than 0.

15. The method according to claim 11 or 12, wherein the uplink scheduling information is used for scheduling the terminal device to perform the first uplink transmission and the second uplink transmission in one slot, and the preset duration between the first uplink transmission and the second uplink transmission is duration corresponding to at least one symbol.

16. The method according to claim 11 or 12, wherein the uplink scheduling information is used for scheduling the terminal device to perform a plurality of repeated transmissions, each of the plurality of repeated transmissions corresponds to a different slot, each of the plurality of repeated transmissions is located in one slot, the first uplink transmission and the second uplink transmission are two consecutive repeated transmissions in the plurality of repeated transmissions, the preset duration between the first uplink transmission and the second uplink transmission is duration corresponding to Nmax-L symbols, and a quantity L of symbols used for the repeated transmission in one slot is less than or equal to a maximum quantity Nmax of symbols comprised in one slot.

17. The method according to claim 16, wherein there is an interval of w symbols between a last symbol occupied by each of the plurality of repeated transmissions in a slot and a start symbol of a next slot of the slot, wherein w is an integer greater than 0; or

there is an interval of x symbols between a 1st symbol occupied by each of the plurality of repeated transmissions in a slot and an end symbol of a previous slot of the slot, wherein x is an integer greater than 0; or
there is an interval of a symbols between a 1st symbol occupied by each of the plurality of repeated transmissions in a slot and an end symbol of a previous slot of the slot, and there is an interval of b symbols between a last symbol occupied by each of the plurality of repeated transmissions in the slot and a start symbol of a next slot of the slot, wherein a and b are integers greater than 0.

18. The method according to claim 11 or 12, wherein the uplink scheduling information is used for scheduling the terminal device to perform a plurality of repeated transmissions in one slot, the first uplink transmission and the second uplink transmission are two consecutive repeated transmissions in the plurality of repeated transmissions, and the preset duration between the first uplink transmission and the second uplink transmission is duration corresponding to at least one symbol.

19. The method according to any one of claims 16 to 18, wherein a quantity of repeated transmissions scheduled by using the uplink scheduling information is X, and the X repeated transmissions satisfy at least one of the following conditions:

when X is greater than 2, the X repeated transmissions are respectively associated with a first timing advance and a second timing advance in a cyclic mapping manner;
when X is equal to 2, the X repeated transmissions are associated with a first timing advance and a second timing advance, a 1st repeated transmission in the X repeated transmissions is associated with the first timing advance, and a 2nd repeated transmission in the X repeated transmissions is associated with the second timing advance, wherein the second timing advance is greater than the first timing advance, or a difference between the second timing advance and the first timing advance is greater than a length of one cyclic prefix;

when X is greater than 4, the X repeated transmissions are respectively associated with a first timing advance and a second timing advance in a sequential mapping manner;
when X is less than or equal to 4, the X repeated transmissions are associated with a first timing advance and a second timing advance in a sequential mapping manner, first $\lceil X/2 \rceil$ repeated transmissions in the X repeated transmissions are associated with the first timing advance, and last $\lfloor X/2 \rfloor$ repeated transmissions in the X repeated transmissions are associated with the second timing advance, wherein the second timing advance is greater than the first timing advance, or a difference between the second timing advance and the first timing advance is greater than a length of one cyclic prefix, $\lceil \ \rceil$ represents rounding up, and $\lfloor \ \rfloor$ represents rounding down; or
timing advances associated with two adjacent repeated transmissions in the X repeated transmissions are different.

20. The method according to any one of claims 11 to 19, wherein the first uplink transmission and the second uplink transmission satisfy at least one of the following conditions:

the second timing advance is greater than the first timing advance;
a difference between the second timing advance and the first timing advance is greater than or equal to a length of one cyclic prefix;
a first difference between the second timing advance and the first timing advance is greater than a second difference between a downlink timing reference of the second uplink transmission and a downlink timing reference of the first uplink transmission;
the first difference is greater than a sum of the second difference and a length of one cyclic prefix;
start time of the second uplink transmission is less than end time of the first uplink transmission; or
a third difference between the downlink timing reference of the second uplink transmission and the second timing advance is less than a sum of a fourth difference between the downlink timing reference of the first uplink transmission and the first timing advance and a time length of the first uplink transmission.

21. An uplink scheduling method, comprising:

determining, by a network device, indication information, wherein the indication information indicates, when an adjacent first uplink transmission and second uplink transmission are respectively associated with different timing advances, a terminal device to perform an uplink transmission in one or more of the following manners: delaying a transmission of data in the second uplink transmission by first duration, wherein the first duration is greater than or equal to second duration, and the second duration is duration of an overlapping area between the first uplink transmission and the second uplink transmission in time domain; advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, wherein a sum of the third duration and the fourth duration is greater than or equal to second duration; or performing a data transmission in the first uplink transmission and the second uplink transmission based on a preset timing advance; and

sending, by the network device, the indication information to the terminal device.

22. The method according to claim 21, wherein the method further comprises:

receiving, by the network device, capability information from the terminal device, wherein the capability information indicates that a capability of the terminal device comprises at least one of the following: not supporting performing a plurality of uplink transmissions simultaneously; not supporting performing the first uplink transmission and the second uplink transmission simultaneously; not supporting performing the uplink transmissions simultaneously by using a beam or a resource associated with the first uplink transmission and a beam or a resource associated with the second uplink transmission; not supporting a rollback from a multi-timing advance mode to a single-timing advance mode;

when the adjacent first uplink transmission and second uplink transmission are respectively associated with different timing advances, supporting delaying the transmission of the data in the second uplink transmission by the first duration;

when the adjacent first uplink transmission and second uplink transmission are respectively associated with different timing advances, supporting advancing the transmission of the data in the first uplink transmission by the first duration;

when the adjacent first uplink transmission and second uplink transmission are respectively associated with different timing advances, supporting stopping the transmission of the data in the overlapping area in the first uplink transmission when the data transmission is performed in the first uplink transmission;

when the adjacent first uplink transmission and second uplink transmission are respectively associated with different timing advances, supporting stopping the transmission of the data in the overlapping area in the second uplink transmission when the data transmission is performed in the second uplink transmission; or

when the adjacent first uplink transmission and second uplink transmission are respectively associated with different timing advances, supporting advancing the transmission of the data in the first uplink transmission by third duration and delaying the transmission of the data in the second uplink transmission by fourth duration.

23. The method according to claim 21 or 22, wherein the preset timing advance is configured by the network device, or the preset timing advance is determined based on at least one of a first timing advance and a second timing advance, the first timing advance is associated with the first uplink transmission, and the second timing advance is associated with the second uplink transmission.

24. The method according to claim 23, wherein the first timing advance associated with the first uplink transmission is different from the second timing advance associated with the second uplink transmission; or the first timing advance associated with the first uplink transmission is greater than the second timing advance associated with the second uplink transmission.

25. The method according to any one of claims 21 to 24, wherein the first duration, the third duration, and the fourth duration are lengths of overlapping between the first uplink transmission and the second uplink transmission.

26. The method according to any one of claims 21 to 24, wherein the first duration, the second duration, the third duration, and the fourth duration are determined based on at least one of the following:
a first frequency band used by the terminal device for an uplink transmission, a first subcarrier spacing used by the terminal device for an uplink transmission, or a first capability of the terminal device, wherein the first capability indicates whether the terminal device supports a case in which a difference between two downlink timing references is greater than a length of a cyclic prefix, or the first capability indicates that the terminal device supports two downlink timing references, and a difference between the two downlink timing references is greater than a length of a cyclic prefix.

27. An uplink scheduling method, comprising:

receiving, by a terminal device, indication information from a network device, wherein the indication information indicates, when an adjacent first uplink transmission and second uplink transmission are respectively associated with different timing advances, the terminal device to perform an uplink transmission in one or more of the following manners: delaying a transmission of data in the second uplink transmission by first duration, wherein the first duration is greater than or equal to second duration, and the second duration is duration of an overlapping area between the first uplink transmission and the second uplink transmission in time domain; advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, wherein a sum of the third duration and the fourth duration is greater than or equal to second duration; or performing a data transmission in the first uplink transmission and the second uplink transmission based on a preset timing advance; and
performing, by the terminal device, an uplink transmission based on the indication information.

28. The method according to claim 27, wherein the method further comprises:

sending, by the terminal device, capability information to the network device, wherein the capability information indicates that a capability of the terminal device comprises at least one of the following: not supporting performing a plurality of uplink transmissions simultaneously;

not supporting performing the first uplink transmission and the second uplink transmission simultaneously; not supporting performing the uplink transmissions simultaneously by using a beam or a resource associated with the first uplink transmission and a beam or a resource associated with the second uplink transmission; not supporting a rollback from a multi-timing advance mode to a single-timing advance mode;
when the adjacent first uplink transmission and second uplink transmission are respectively associated with different timing advances, supporting delaying the transmission of the data in the second uplink transmission by the first duration;
when the adjacent first uplink transmission and second uplink transmission are respectively associated with different timing advances, supporting advancing a transmission of the data in the first uplink transmission by the first duration;
when the adjacent first uplink transmission and second uplink transmission are respectively associated with different timing advances, supporting stopping the transmission of the data in the overlapping area in the first uplink transmission when the data transmission is performed in the first uplink transmission;
when the adjacent first uplink transmission and second uplink transmission are respectively associated with different timing advances, supporting stopping the transmission of the data in the overlapping area in the second uplink transmission when the data transmission is performed in the second uplink transmission; or
when the adjacent first uplink transmission and second uplink transmission are respectively associated with different timing advances, supporting advancing the transmission of the data in the first uplink transmission by third duration and delaying the transmission of the data in the second uplink transmission by fourth duration.

29. The method according to claim 27 or 28, wherein the preset timing advance is configured by the network device, or the preset timing advance is determined based on at least one of a first timing advance and a second timing advance, the first timing advance is associated with the first uplink transmission, and the second timing advance is associated with the second uplink transmission.

30. The method according to claim 29, wherein the first timing advance associated with the first uplink transmission is different from the second timing advance associated with the second uplink transmission; or the first timing advance associated with the first uplink transmission is greater than the second timing advance associated with the second uplink transmission.

31. The method according to any one of claims 27 to 30, wherein the first duration, the third duration, and the fourth duration are lengths of overlapping between the first uplink transmission and the second uplink transmission.

32. The method according to any one of claims 27 to 30, wherein the first duration, the second duration, the third duration, and the fourth duration are determined based on at least one of the following:
a first frequency band used by the terminal device for an uplink transmission, a first subcarrier spacing used by the terminal device for an uplink transmission, or a first capability of the terminal device, wherein the first capability indicates whether the terminal device supports a case in which a difference between two downlink timing references is greater than a length of a cyclic prefix, or the first capability indicates that the terminal device supports two downlink timing references, and a difference between the two downlink timing references is greater than a length of a cyclic prefix.

33. A communication apparatus, comprising:

a processing unit, configured to determine uplink scheduling information, wherein the uplink scheduling information is used for scheduling a terminal device to perform a first uplink transmission and a second uplink transmission, a first timing advance associated with the first uplink transmission is different from a second timing advance associated with the second uplink transmission, the first uplink transmission and the second uplink transmission are two consecutive uplink transmissions, and there is an interval of preset duration between the first uplink transmission and the second uplink transmission; and
a communication unit, configured to send the uplink scheduling information to the terminal device.

34. The apparatus according to claim 33, wherein the preset duration is determined based on at least one of the following:
a frequency band used by the terminal device for an uplink transmission, a subcarrier spacing used by the terminal device for an uplink transmission, or a capability of the terminal device, wherein the capability of the terminal device indicates whether the terminal device supports a case in which a difference between two downlink timing references is greater than a length of a cyclic prefix.

35. The apparatus according to claim 33 or 34, wherein the uplink scheduling information is used for scheduling the terminal device to perform the first uplink transmission in a first slot and perform the second uplink transmission in a second slot, the first slot is adjacent to the second slot, and the preset duration between a last symbol used for the first uplink transmission in the first slot and a $1^{st}$ symbol used for the second uplink transmission in the second slot is duration corresponding to at least one symbol.

36. The apparatus according to claim 35, wherein the first slot is before the second slot, and the first slot and the second slot scheduled by using the uplink scheduling information satisfy one or more of the following:

if the last symbol in the first slot is used for the first uplink transmission, a start symbol used for the second uplink transmission in the second slot is an $n^{th}$ symbol in the second slot, wherein n is an integer greater than 1;
if the $1^{st}$ symbol in the second slot is used for the second uplink transmission, there is an interval of k symbols between the last symbol used for the first uplink transmission in the first slot and the $1^{st}$ symbol in the second slot, wherein k is an integer greater than 0;
there is an interval of p symbols between the last symbol used for the first uplink transmission in the first slot and the $1^{st}$ symbol in the second slot, wherein p is an integer greater than 0;
there is an interval of q symbols between the $1^{st}$ symbol used for the second uplink transmission in the second slot and the last symbol in the first slot, wherein q is an integer greater than 0; or there is an interval of m symbols between the last symbol used for the first uplink transmission in the first slot and the $1^{st}$ symbol used for the second uplink transmission in the second slot, wherein m is an integer greater than 0.

37. The apparatus according to claim 33 or 34, wherein the uplink scheduling information is used for scheduling the terminal device to perform the first uplink transmission and the second uplink transmission in one slot, and the preset duration between the first uplink transmission and the second uplink transmission is duration corresponding to at least one symbol.

38. A communication apparatus, comprising:

a communication unit, configured to receive uplink scheduling information from a network device, wherein the uplink scheduling information is used for scheduling the terminal device to perform a first uplink transmission and a second uplink transmission, a first timing advance associated with the first uplink transmission is different from a second timing advance associated with the second uplink transmission, the first uplink transmission and the second uplink transmission are two consecutive uplink transmissions, and there is an interval of preset duration between the first uplink transmission and the second uplink transmission; and
a processing unit, configured to perform the first uplink transmission and the second uplink transmission based on the uplink scheduling information through the communication unit.

39. The apparatus according to claim 38, wherein the preset duration is determined based on at least one of the following:
a frequency band used by the terminal device for an uplink transmission, a subcarrier spacing used by the terminal device for an uplink transmission, or a capability of the terminal device, wherein the capability of the terminal device indicates whether the terminal device supports a case in which a difference between two downlink timing references is greater than a length of a cyclic prefix.

40. The apparatus according to claim 38 or 39, wherein the uplink scheduling information is used for scheduling the terminal device to perform the first uplink transmission in a first slot and perform the second uplink transmission in a second slot, the first slot is adjacent to the second slot, and the preset duration between a last symbol used for the first uplink transmission in the first slot and a $1^{st}$ symbol used for the second uplink transmission in the second slot is duration corresponding to at least one symbol.

41. The apparatus according to claim 38, wherein the first slot is before the second slot, and the first slot and the second slot scheduled by using the uplink scheduling information satisfy one or more of the following:

if the last symbol in the first slot is used for the first uplink transmission, a start symbol used for the second uplink transmission in the second slot is an $n^{th}$ symbol in the second slot, wherein n is an integer greater than 1;
if the $1^{st}$ symbol in the second slot is used for the second uplink transmission, there is an interval of k symbols between the last symbol used for the first uplink transmission in the first slot and the $1^{st}$ symbol in the second slot, wherein k is an integer greater than 0;
there is an interval of p symbols between the last symbol used for the first uplink transmission in the first slot and the $1^{st}$ symbol in the second slot, wherein p is an integer greater than 0;

there is an interval of q symbols between the $1^{st}$ symbol used for the second uplink transmission in the second slot and the last symbol in the first slot, wherein q is an integer greater than 0; or
there is an interval of m symbols between the last symbol used for the first uplink transmission in the first slot and the $1^{st}$ symbol used for the second uplink transmission in the second slot, wherein m is an integer greater than 0.

42. The apparatus according to claim 38 or 39, wherein the uplink scheduling information is used for scheduling the terminal device to perform the first uplink transmission and the second uplink transmission in one slot, and the preset duration between the first uplink transmission and the second uplink transmission is duration corresponding to at least one symbol.

43. A communication apparatus, comprising:

a processing unit, configured to determine indication information, wherein the indication information indicates, when an adjacent first uplink transmission and second uplink transmission are respectively associated with different timing advances, a terminal device to perform an uplink transmission in one or more of the following manners: delaying a transmission of data in the second uplink transmission by first duration, wherein the first duration is greater than or equal to second duration, and the second duration is duration of an overlapping area between the first uplink transmission and the second uplink transmission in time domain;
advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, wherein a sum of the third duration and the fourth duration is greater than or equal to second duration; or performing a data transmission in the first uplink transmission and the second uplink transmission based on a preset timing advance; and
a communication unit, configured to send the indication information to the terminal device.

44. The apparatus according to claim 43, wherein the communication unit is further configured to:

receive capability information from the terminal device, wherein the capability information indicates that a capability of the terminal device comprises at least one of the following: not supporting performing a plurality of uplink transmissions simultaneously;

not supporting performing the first uplink transmission and the second uplink transmission simultaneously; not supporting performing the uplink transmissions simultaneously by using a beam or a resource associated with the first uplink transmission and a beam or a resource associated with the second uplink transmission; not supporting a rollback from a multi-timing advance mode to a single-timing advance mode;

when the adjacent first uplink transmission and second uplink transmission are respectively associated with different timing advances, supporting delaying the transmission of the data in the second uplink transmission by the first duration;

when the adjacent first uplink transmission and second uplink transmission are respectively associated with different timing advances, supporting advancing a transmission of the data in the first uplink transmission by the first duration;

when the adjacent first uplink transmission and second uplink transmission are respectively associated with different timing advances, supporting stopping the transmission of the data in the overlapping area in the first uplink transmission when the data transmission is performed in the first uplink transmission;

when the adjacent first uplink transmission and second uplink transmission are respectively associated with different timing advances, supporting stopping the transmission of the data in the overlapping area in the second uplink transmission when the data transmission is performed in the second uplink transmission; or

when the adjacent first uplink transmission and second uplink transmission are respectively associated with different timing advances, supporting advancing the transmission of the data in the first uplink transmission by third duration and delaying the transmission of the data in the second uplink transmission by fourth duration.

45. The apparatus according to claim 43 or 44, wherein the preset timing advance is configured by the network device, or the preset timing advance is determined based on at least one of a first timing advance and a second timing advance, the first timing advance is associated with the first uplink transmission, and the second timing advance is associated with the second uplink transmission.

46. The apparatus according to claim 45, wherein the first timing advance associated with the first uplink transmission is different from the second timing advance associated with the second uplink transmission; or the first timing advance associated with the first uplink transmission is greater than the second timing advance associated with the second uplink transmission.

47. The apparatus according to any one of claims 43 to 46, wherein the first duration, the second duration, the third duration, and the fourth duration are determined based on at least one of the following:
a first frequency band used by the terminal device for an uplink transmission, a first subcarrier spacing used by the terminal device for an uplink transmission, or a first capability of the terminal device, wherein the first capability indicates whether the terminal device supports a case in which a difference between two downlink timing references is greater than a length of a cyclic prefix, or the first capability indicates that the terminal device supports two downlink timing references, and a difference between the two downlink timing references is greater than a length of a cyclic prefix.

48. A communication apparatus, comprising:

a communication unit, configured to receive indication information from a network device, wherein the indication information indicates, when an adjacent first uplink transmission and second uplink transmission are respectively associated with different timing advances, a terminal device to perform an uplink transmission in one or more of the following manners: delaying a transmission of data in the second uplink transmission by first duration, wherein the first duration is greater than or equal to second duration, and the second duration is duration of an overlapping area between the first uplink transmission and the second uplink transmission in time domain;

advancing a transmission of data in the first uplink transmission by the first duration; when a data transmission is performed in the first uplink transmission, stopping transmission of data in the overlapping area in the first uplink transmission; when a data transmission is performed in the second uplink transmission, stopping transmission of data in the overlapping area in the second uplink transmission; advancing a transmission of data in the first uplink transmission by third duration, and delaying a transmission of data in the second uplink transmission by fourth duration, wherein a sum of the third duration and the fourth duration is greater than or equal to second duration; or performing a data transmission in the first uplink transmission and the second uplink transmission based on a preset timing advance; and

a processing unit, configured to perform an uplink transmission based on the indication information.

49. The apparatus according to claim 48, wherein the communication unit is further configured to:

send capability information to the network device, wherein the capability information indicates that a capability of the terminal device comprises at least one of the following: not supporting performing a plurality of uplink transmissions simultaneously;

not supporting performing the first uplink transmission and the second uplink transmission simultaneously; not supporting performing the uplink transmissions simultaneously by using a beam or a resource associated with the first uplink transmission and a beam or a resource associated with the second uplink transmission; not supporting a rollback from a multi-timing advance mode to a single-timing advance mode;

when the adjacent first uplink transmission and second uplink transmission are respectively associated with different timing advances, supporting delaying the transmission of the data in the second uplink transmission by the first duration;

when the adjacent first uplink transmission and second uplink transmission are respectively associated with different timing advances, supporting advancing a transmission of the data in the first uplink transmission by the first duration;

when the adjacent first uplink transmission and second uplink transmission are respectively associated with different timing advances, supporting stopping the transmission of the data in the overlapping area in the first uplink transmission when the data transmission is performed in the first uplink transmission;

when the adjacent first uplink transmission and second uplink transmission are respectively associated with different timing advances, supporting stopping the transmission of the data in the overlapping area in the second uplink transmission when the data transmission is performed in the second uplink transmission; or

when the adjacent first uplink transmission and second uplink transmission are respectively associated with different timing advances, supporting advancing the transmission of the data in the first uplink transmission by third duration and delaying the transmission of the data in the second uplink transmission by fourth duration.

50. The apparatus according to claim 48 or 49, wherein the preset timing advance is configured by the network device, or the preset timing advance is determined based on at least one of a first timing advance and a second timing advance, the first timing advance is associated with the first uplink transmission, and the second timing advance is associated with the second uplink transmission.

51. The apparatus according to claim 50, wherein the first timing advance associated with the first uplink transmission is different from the second timing advance associated with the second uplink transmission; or the first timing advance associated with the first uplink transmission is greater than the second timing advance associated with the second uplink transmission.

52. The apparatus according to any one of claims 48 to 51, wherein the first duration, the second duration, the third duration, and the fourth duration are determined based on at least one of the following:

a first frequency band used by the terminal device for an uplink transmission, a first subcarrier spacing used by the terminal device for an uplink transmission, or a first capability of the terminal device, wherein the first capability indicates whether the terminal device supports a case in which a difference between two downlink timing references is greater than a length of a cyclic prefix, or the first capability indicates that the terminal device supports two downlink timing references, and a difference between the two downlink timing references is greater than a length of a cyclic prefix.

53. A communication apparatus, comprising a processor, wherein the processor is configured to execute a computer program or instructions in a memory, to enable the communication apparatus to implement the method according to any one of claims 1 to 32.

54. A computer-readable storage medium, storing a computer program or instructions, wherein when the computer program or the instructions are run on a computer, the computer is enabled to implement the method according to any one of claims 1 to 32.

55. A communication system, comprising a network device configured to perform the method according to any one of claims 1 to 10, and a terminal device configured to perform the method according to any one of claims 11 to 20.

Slot 0        Slot 1

Four symbols

FIG. 1

Slot 0

| UL | UL | | | DL | DL | UL | UL | UL | UL | UL | UL | UL | UL |

rep1      rep2      rep3

FIG. 2

| PUSCH 1 | PUSCH 2 | PUSCH 1 | PUSCH 2 |

FIG. 3

| PUSCH 1 | PUSCH 1 | PUSCH 2 | PUSCH 2 |

FIG. 4

FIG. 5

Terminal device

FIG. 6

Send a signal to a network
device 1 in a slot 1

Send a signal to a network
device 2 in a slot 2

**FIG. 7**

Terminal
device

Network
device

S801: The terminal
device sends capability
information to the
network device

Capability information

S802: The network
device determines
indication information

S803: The network
device sends the
indication information to
the terminal device

Indication information

**FIG. 8**

| Terminal device | | Network device |
| --- | --- | --- |

S901: The network device determines uplink scheduling information

S902: The network device sends the uplink scheduling information to the terminal device

Uplink scheduling information

S903: The terminal device performs a first uplink transmission and a second uplink transmission based on the uplink scheduling information

FIG. 9

Slot 0           Slot 1

Mapping type A

L symbols         L symbols

Slot 0           Slot 1

Mapping type B

L symbols         L symbols

FIG. 10

FIG. 11

FIG. 12

## INTERNATIONAL SEARCH REPORT

| International application No. |
|---|
| **PCT/CN2023/111071** |

### A. CLASSIFICATION OF SUBJECT MATTER

H04W 72/12(2023.01)i

According to International Patent Classification (IPC) or to both national classification and IPC

### B. FIELDS SEARCHED

Minimum documentation searched (classification system followed by classification symbols)

IPC: H04W,H04Q

Documentation searched other than minimum documentation to the extent that such documents are included in the fields searched

Electronic data base consulted during the international search (name of data base and, where practicable, search terms used)

DWPI, ENTXT, CNKI, CNTXT, 3GPP: 上行, 调度, 定时提前, 载波, 间隔, 符号, 时隙, 重复, 传输, UL, scheduling, timing advance, TA, carrier, spacing, symbol, slot, repetition, transmission

### C. DOCUMENTS CONSIDERED TO BE RELEVANT

| Category* | Citation of document, with indication, where appropriate, of the relevant passages | Relevant to claim No. |
|---|---|---|
| X | CN 111279624 A (HUAWEI TECHNOLOGIES CO., LTD.) 12 June 2020 (2020-06-12) description, paragraphs [0006]-[0087] | 1-55 |
| A | CN 104349451 A (CHINA ACADEMY OF TELECOMMUNICATIONS TECHNOLOGY) 11 February 2015 (2015-02-11) entire document | 1-55 |
| A | CN 114126056 A (HUAWEI TECHNOLOGIES CO., LTD.) 01 March 2022 (2022-03-01) entire document | 1-55 |
| A | US 2022078734 A1 (QUALCOMM INC.) 10 March 2022 (2022-03-10) entire document | 1-55 |
| A | ERICSSON. "Two different TA sizes for RAR and saving of a byte" *3GPP TSG RAN WG1 Meeting #91, R1-1720947*, 27 December 2017 (2017-12-27), entire document | 1-55 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 October 2023** | **16 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

| International application No. |
|---|
| **PCT/CN2023/111071** |

| Patent document cited in search report | | | Publication date (day/month/year) | Patent family member(s) | | | Publication date (day/month/year) |
|---|---|---|---|---|---|---|---|
| CN | 111279624 | A | 12 June 2020 | WO | 2019081020 | A1 | 02 May 2019 |
| CN | 104349451 | A | 11 February 2015 | | None | | |
| CN | 114126056 | A | 01 March 2022 | | None | | |
| US | 2022078734 | A1 | 10 March 2022 | EP | 4209065 | A1 | 12 July 2023 |
| | | | | WO | 2022051145 | A1 | 10 March 2022 |
| | | | | CN | 116158133 | A | 23 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210970352
- CN 202310084191